# EUROPÄISCHE PATENTSCHRIFT

(11) **EP 3 313 704 B1**
(45) Veröffentlichungstag und Bekanntmachung des Hinweises auf die Patenterteilung: **06.03.2024**
(21) Anmeldenummer: 16728319.1
(22) Anmeldetag: 10.06.2016
(51) Int. Cl.: B60W 40/06, G01C 21/30, B60W 50/00

(54) **VERFAHREN UND VORRICHTUNG ZUR BEREITSTELLUNG VON DATEN EINES FAHRSTRECKENPROFILS IN EINEM FAHRZEUG**
METHOD AND APPARATUS FOR PROVIDING DATA OF A ROUTE PROFILE IN A VEHICLE
PROCÉDÉ ET DISPOSITIF POUR FOURNIR DES DONNÉES D'UN PROFIL DE TRAJET DANS UN VÉHICULE

(30) Priorität: 26.06.2015 DE 102015211894
(43) Veröffentlichungstag der Anmeldung: 02.05.2018
(73) Patentinhaber: Bayerische Motoren Werke Aktiengesellschaft, 80809 München (DE)
(72) Erfinder: AUGST, Alexander, 80937 Muenchen (DE)
(86) Internationale Anmeldenummer: PCT/EP2016/063306
(87) Internationale Veröffentlichungsnummer: WO 2016/206994

(56) Entgegenhaltungen:
- DE-A1-102012 009 674
- US-A1- 2015 160 021
- HOLZAPFEL W ET AL: "ROAD PROFILE RECOGNITION FOR AUTONOMOUS CAR NAVIGATION AND NAVSTAR GPS SUPPORT", IEEE TRANSACTIONS ON AEROSPACE AND ELECTRONIC SYSTEMS, IEEE SERVICE CENTER, PISCATAWAY, NJ, US, Bd. 39, Nr. 1, 31. Januar 2003 (2003-01-31), Seiten 2-12, XP001158255, ISSN: 0018-9251, DOI: 10.1109/TAES.2003.1188890
- I Kertesz ET AL: "MEASUREMENT OF ROAD ROUGHNESS BY LOW-COST PHOTOGRAMMETRIC SYSTEM", , 29. Mai 2007 (2007-05-29), XP055221423, Gefunden im Internet: URL:http://www.isprs.org/proceedings/XXXVI /5-C55/papers/kertesz_imre.pdf

## Beschreibung

Die Erfindung betrifft ein Verfahren zur Bereitstellung von Daten eines Fahrstreckenprofils in einem Fahrzeug sowie eine korrespondierende Vorrichtung. Die Erfindung betrifft des Weiteren ein Computerprogramm und ein Computerprogrammprodukt.

Aus der Automobiltechnik sind diverse technische Lösungen bekannt, die dazu dienen, dass ein Fahrzeug bzw. zumindest eine Fahrgastzelle des Fahrzeugs, trotz sehr unterschiedlicher und teils sehr schlechter Fahrbahn qualität, relativ stabil und komfortabel bewegt werden kann. Diese technische Lösungen basieren auf einer äußerst aufwändigen Aktorik und Regelungstechnik, die z. B. dazu dient, vertikaldynamische und sonstige Einflüsse einer Fahrstrecke so weit wie möglich auszugleichen. Dies bedingt meistens eine signifikante Erhöhung des Fahrzeuggewichts und einen hohen Energieverbrauch.

Auch sind Navigationssysteme für Fahrzeuge bekannt, die Informationen umfassen über Straßen mit einem mehr oder minder gutem Fahrbahnbelag. Beispielsweise werden schlechte Straßen oder bestimmte Hindernisse, zum Beispiel Baustellenbereiche, als solche in einer Karte gekennzeichnet, wobei ergänzend ein Fahrer des Fahrzeugs automatisch gewarnt werden kann. Somit kann der Fahrer solche Straßen meiden. Solche Informationen tragen einen abstrakten Charakter, d.h. sie beschreiben zum Beispiel nicht einen konkreten geometrischen Verlauf einer Straßenwelligkeit oder Spurrinnen.

Eine Information, die eine denkbare hochpräzise quantitative Information über einen genauen Verlauf des Fahrbahnprofils angibt, würde derzeit eine derartig große Datenmenge bilden, dass diese nicht in Echtzeit in einem heutigen Kraftfahrzeug präzise genug zugeordnet oder angewandt werden könnte. Auch verfügen heutige Kraftfahrzeuge aus mehreren Gründen nicht über eine Eigenpositionsbestimmung, die ein räumlich hinreichend passendes Sammeln oder eine spätere Anwendung lokaler Information ermöglichen würde.

Verfahren und Vorrichtungen des Stands der Technik zum Bereitstellen von Daten eines Fahrstreckenprofils sind aus US 2015/160021 A1 und Holzapfel, W. et al.: "ROAD PROFILE RECOGNITION FOR AUTONOMOUS CAR NAVIGATION AND NAVSTAR GPS SUPPORT",IEEE TRANSACTIONS ON AEROSPACE AND ELECTRONIC SYSTEMS, IEEE SERVICE CENTER, PISCATAWAY, NJ, US, Bd. 39, Nr. 1, 31. Januar 2003 Seiten 2-12, bekannt.

Die Aufgabe, die der Erfindung zugrunde liegt, ist es, ein Verfahren und eine korrespondierende Vorrichtung zu schaffen, die dazu beitragen, dass Daten eines Fahrstreckenprofils, die lokale physikalische Eigenschaften eines Fahrstreckenprofils repräsentieren, effizient im Fahrzeug bereitgestellt werden können.

Die Aufgabe wird gelöst durch die Merkmale der unabhängigen Patentansprüche. Vorteilhafte Ausgestaltungen sind in den Unteransprüchen gekennzeichnet.

Die Erfindung zeichnet sich aus durch ein Verfahren und eine korrespondierende Vorrichtung zur Bereitstellung von Daten eines Fahrstreckenprofils in einem Fahrzeug. Es werden für einen vorgegebenen Fahrstreckenabschnitt erste Fahrstreckenprofildaten ermittelt abhängig von Daten, die mittels einer vorgegebenen Sensorvorrichtung des Fahrzeugs oder eines weiteren Fahrzeugs erfasst werden, wobei die ersten Fahrstreckenprofildaten repräsentativ sind für zumindest eine erste lokale physikalische Fahrbahneigenschaft des vorgegebenen Fahrstreckenabschnitts. Es werden bereitgestellte kodierte zweite Fahrstreckenprofildaten eingelesen, die sich zumindest teilweise auf den vorgegebenen Fahrstreckenabschnitt beziehen, für den die ersten Fahrstreckenprofildaten eingelesen wurden, wobei die kodierten zweiten Fahrstreckenprofildaten eine abhängig von zweiten Fahrstreckenprofildaten ermittelte Spektralverteilung und/oder Spektralverteilungsfunktion umfassen und die zweiten Fahrstreckenprofildaten repräsentativ sind für zumindest eine zweite lokale physikalische Fahrbahneigenschaft. Des Weiteren wird ein Ähnlichkeitsmaß zwischen einem oder mehreren in den ersten Fahrstreckenprofildaten und den kodierten zweiten Fahrstreckenprofildaten repräsentierten Verlauf zumindest einer physikalischen Eigenschaft und/oder Spektralverteilungsfunktion zumindest einer physikalischen Eigenschaften ermittelt. Abhängig von dem Ähnlichkeitsmaß wird eine Dekodierungsinformation für die kodierten zweiten Fahrstreckenprofildaten ermittelt und abhängig von der Dekodierungsinformation werden die kodierten zweiten Fahrstreckenprofildaten zumindest teilweise dekodiert und bereitgestellt.

Dabei können die ersten Fahrstreckenprofildaten im Verfahren aus Daten ermittelt werden, die mit einer in dem Fahrzeug verbauten Sensorvorrichtung oder mit einer mit dem Fahrzeug beweglichen Sensorvorrichtung erfasst und bereitgestellt werden. Beispielsweise kann die Sensorvorrichtung eine im Fahrzeug vorhandene Stereokamera umfassen oder die Sensorvorrichtung kann ein portabler Teil einer im Fahrzeug befestigten, insbesondere für die Ausführung des Verfahrens eingerichteten Vorrichtung sein. Das Ermitteln kann dabei insbesondere ein gezieltes und/oder selektives Einlesen der Daten aus einer Sensorvorrichtung umfassen.

Die bereitgestellten zweiten Fahrstreckenprofildaten, die sich zumindest teilweise auf den vorgegebenen Fahrstreckenabschnitt beziehen, können abhängig von einer Abfolge von globalen und/oder relativen Positionen des Fahrzeugs eingelesen werden, insbesondere gezielt ausgewählt eingelesen werden. Somit können aus einer sehr großen Datenmenge sehr effizient ein oder mehrere Datenabschnitte ermittelt und eingelesen werden.

Dabei können die kodierten zweiten Fahrstreckenprofildaten von einem Datenträger, auf dem diese langfristig innerhalb oder außerhalb des Fahrzeugs, z. B. in einem Backend, Internetportal oder einer sogenannten Cloud gespeichert sind, gezielt bereitgestellt werden.

Vorteilhafterweise können so mit Hilfe von ersten Fahrstreckenprofildaten, die mittels einer Sensorik erfasst werden, die bereitgestellten kodierten zweiten Fahrstreckenprofildaten passend zu der Umgebung des Fahrzeugs dekodiert werden. Besonders vorteilhaft ist, dass die ersten Fahrstreckenprofildaten auch sehr einfach erfasst werden können, das heißt insbesondere mit einer geringeren Genauigkeit als die zweiten Fahrstreckenprofildaten. Die zweiten Fahrstreckenprofildaten sind vorzugsweise sehr detailliert, sehr genau und aufwendig erfasst, so dass eine Datenmenge der nicht-kodierten zweiten Fahrstreckenprofildaten für den vorgegebenen Fah rstreckenabschnitt wesentlich höher ist als bei den ersten Fahrstreckenprofildaten. Die ersten und/oder zweiten Fahrstreckenprofildaten können in dem Fahrzeug geeignet genutzt werden, vorzugsweise für Fahrwerksysteme, insbesondere Vertikaldynamiksysteme des Fahrzeugs, weitere Steuerung - und Regelungssysteme, Informationssysteme oder Fahrerassistenzsysteme. Dabei können die bereitgestellten zweiten Fahrstreckenprofildaten mit oder ohne die ersten Fahrstreckenprofildaten in Echtzeit genutzt werden.

Insbesondere kann abhängig von den ersten Fahrstreckenprofildaten und/oder zweiten Fahrstreckenprofildaten eine echtzeitfähige und/oder prädiktive Kompensation von Störgrößen eines oder mehrerer Regelsysteme des Fahrzeugs, insbesondere des Fahrwerks des Fahrzeugs ausgeführt werden. Auch kann eine laufende, insbesondere prädiktive Anpassung einer oder mehrerer Stellgrößen und/oder Parameter solcher Systeme vorteilhaft angewandt werden. Somit kann z. B. ein Regelungssystem des Fahrzeugs bei gleichen Anforderungen an die Stabilität, beispielsweise sehr viel weniger träge, sehr viel leichter und energiesparender gestaltet sein.

Ferner können die derart bereitgestellten Daten unmittelbar oder mittelbar zur Ansteuerung zumindest eines Aktors des Fahrzeugs genutzt werden. Beispielsweise kann auch eine Veränderung zumindest einer Fahrzeugfunktion zur teilautomatisierten Längsführung und/oder Querführung des Fahrzeugs oder Vertikaldynamik des Fahrzeugs erfolgen.

Die zweiten Fahrstreckenprofildaten können dabei, insbesondere zusammen mit odometrischen Daten und/oder geometrischen Daten des Fahrzeugs, eine Information über die aktuelle oder zu erwartende Einwirkung bestimmter lokaler Fahrbahneigenschaften auf bestimmte Teile, insbesondere Räder, des Fahrzeugs repräsentieren. Alternativ kann die Information über die zu erwartende Einwirkungen, insbesondere in Bezug auf eine Ortsinformation und/oder Zeitinformation, abhängig von den zweiten Fahrstreckendaten ermittelt und bereitgestellt werden.

Vorzugsweise ist auch eine geeignete Nutzung der ersten Fahrstreckenprofildaten vorgesehen. Besonders bevorzugt können die zweiten Fahrstreckenprofildaten (vor einer Bereitstellung oder nach einer Bereitstellung) mit den ersten Fahrstreckenprofildaten fusioniert werden. Dabei kann z. B. eine gegenseitige Vervollständigung und/oder Korrektur der Daten erfolgen.

Die ersten und zweiten Fahrstreckenprofildaten sind insbesondere repräsentativ für einen Verlauf einer physikalischen Fahrbahneige nschaft bezogen auf eine Größe, die eine Ortsinformation und/oder Zeitinformation repräsentiert. Hierbei kann der Verlauf von absoluten Größen und/oder relativen Größen der lokalen physikalischen Fahrbahneigenschaft erfasst beziehungsweise ermittelt werden. Ein Verlauf einer physikalischen Fahrbahneigenschaft kann dabei durch eine oder mehrere Funktionen, naturwissenschaftliche Zusammenhänge, Tabellen, Vielzahl von einzelnen Werten usw. beschrieben werden, z. B. in Bezug auf regelmäßige Abstände oder Zeitintervalle.

Bei der Ortsinformation und/oder Zeitinformation kann es sich um eine absolute und/oder relative Ortsinformation bzw. Zeitinformation handeln. Beispielsweise kann sich die Ortsinformation eine Distanz oder eine Position zwischen einer bestimmten Stelle der Fahrstrecke und einem bestimmten Teil des Fahrzeugs beziehen. Eine relative Zeitinformation kann in Zeiteinheiten in Relation zu einem aktuellen Zeitpunkt ausgedrückt werden.

Bei einem Fahrstreckenabschnitt kann es sich bevorzugt um Abschnitte von Straßen- oder Fahrspuren handeln. Alternativ oder zusätzlich kann der Fahrstreckenabschnitt ein beliebig geformtes und ausgedehntes Geländ e oder Boden sein mit oder ohne künstlich geschaffene Merkmale, zum Beispiel einer Infrastruktur.

Bevorzugt umfassen die lokalen physikalischen Fahrbahneigenschaften zumindest eine lokale Verteilung vorgegebener geometrischer Größen innerhalb des Fahrstreckenabschnitts. Diese können bevorzugt zumindest eine lokale Verteilung bestimmter Messwerte im Zusammenhang mit einer Fahrbahnoberfläche, bevorzugt ein Höhenprofil, umfassen. Insbesondere bezieht sich die Verteilung lokaler physikalischen Eigenschaften auf eine räumliche Auflösung von ca. 1 bis 10 Meter, bevorzugt auf 0,1 Meter bis 1 Meter, besonders bevorzugt 0,01 Meter bis 0,5 Meter.

Darüber hinaus ist die Verarbeitung weiterer permanenter oder veränderliche (bzw. zeitabhängiger) Messgrößen, die einen bestimmten Fahrstreckenabschnitt, insbesondere zu einem bestimmten Zeitintervall, kennzeichnen, möglich und vorteilhaft.

Die lokalen physikalischen Fahrbahneige nschaften können sich bevorzugt auf einen Fahrstreckenabschnitt oder auf einen Teil eines Fahrstreckenprofils oder einer Fahrstrecke mit einer horizontalen Ausdehnung von beispielsweise 0 bis 100 Meter beziehen, besonders bevorzugt auf zirka 10 Meter. Auch können die entsprechenden Daten somit gut handhabbare Datenpakete bilden.

Die Kodierung der zweiten Fahrstreckenprofildaten mittels einer Spektralverteilung und/oder Spektralverteilungsfunktion ermöglicht, dass an sich extrem umfangreiche Daten, wie zum Beispiel eine Verteilung von Parametern, wie zum Beispiel Höhenunterschiede entlang eines Fahrstreckenabschnitts, in eine sehr kompakte Form gebracht werden können.

Die Spektralverteilung und/oder die Spektralverteilungsfunktion der zweiten Fahrstreckenprofildaten kann effizient in das Fahrzeug übertragen werden, beispielsweise von einen Server und/oder einem anderen Fahrzeug, beispielsweise in Form einer kontinuierlichen Übertragung als Datenstrom. Insbesondere umfasst die Übertragung eine drahtlose Übertragung in Form von mehreren Datenpaketen. Dabei kann eine Aufteilung der Daten in Datenpakete bevorzugt in Abhängigkeit von dem Bezug der Daten zu bestimmten Fahrstreckenprofilen erfolgen.

Die Spektralverteilung wird insbesondere mittels einer zeitdiskreten Fourier-Analyse ermittelt, insbesondere mittels einer Fourier-Transformation. Als Fourier-Transformation ist hier zusammenfassend eine Methode der Fourier-Analyse bezeichnet, die es erlaubt, kontinuierliche, aperiodische Signale in ein kontinuierliches Spektrum zu zerlegen. Die Funktion, die dieses Spektrum beschreibt, wird auch bezeichnet als Fourier-transformierte oder Spektralfunktion. Im Wesentlichen umfasst die Ermittlung der Spektralverteilung die Bildung einer Spektralfunktion bevorzugt mit diskreten Formen der Fourier-Analyse, beispielsweise mittels einer schnellen Fourier-Transformation (FFT), einer Cosinustransformation und/oder einer modifizierten diskreten Cosinustransformation (MDCT), insbesondere aufgelöst nach einem Ort.

Bei den zweiten Fahrstreckenprofildaten und/oder bei den zweiten lokalen physikalischen Fahrbahneigen schaften kann es sich um eine Datenfusion bzw. Datenaggregation aus den in der Vergangenheit von mehreren Fahrzeugen, insbesondere sensorisch, erfassten Daten handeln. Durch eine solche Aggregation der Daten kann eine hohe Verlässlichkeit, Genauigkeit und ein sehr hoher Anteil von abgedeckten Straßen in einem Straßennetz erreicht werden.

Die Dekodierungsinformation für die kodierten zweiten Fahrstreckenprofildaten kann sich auf die Dekodierung und/oder Anwendung vorgegebener Datenabschnitte der kodierten zweiten Fahrstreckenprofildaten beziehen. Dabei kann die Dekodierung der kodierten zweiten Fahrstreckenprofildaten, die von einem Datenträger im Fahrzeug oder von einem Backend als ein Streaming bereitgestellt werden, in dem Fahrzeug passend zu einen aktuell oder demnächst zu befahrenden Fahrstreckenabschnitt, insbesondere passend zu dem aktuellen Bedarf von prädiktiven Regelungssystemen des Fahrzeugs erfolgen(z. B. in Bezug auf bestimmte räumliche Bereiche oder einen bestimmten Prädiktionszeithorizont). Dabei können bestimmte Datenabschnitte auch gezielt und in einer optimierten Reihenfolge abgerufen werden.

Alternativ oder zusätzlich kann die Dekodierungsinformation in dem Fahrzeug ermittelt werden und an ein weiteres Fahrzeug übermittelt werden, so dass das weitere Fahrzeug die kodierten zweiten Fahrstreckenprofildaten mit der empfangenen Dekodierungsinformation dekodieren kann.

Die Dekodierungsinformation für die kodierten zweiten Fahrstreckenprofildaten kann eine Information mittels Durchführung einer Synthese mittels einer umgekehrten Fourier-Funktion umfassen.

Das Ähnlichkeitsmaß kann hierbei abhängig von einem Maß für eine Korrelation oder Kreuzkorrelation entsprechender räumlicher oder zeitlicher Verläufe der zweiten Fahrstreckenprofildaten und der ersten Fahrstreckenprofildaten ermittelt werden. Auch kann das Ähnlichkeitsmaß abhängig von einer Form, Phasenparametern, insbesondere Phasen mit wertsteigenden oder wertfallenden Messgrößen, anhand bestimmter markanter Punkte innerhalb einer Wertefolge der physikalischen Fahrbahneigenschaften ermittelt oder geschätzt werden.

Alternativ oder zusätzlich kann das Ähnlichkeitsmaß durch eine oder mehrere Mustererkennungen ermittelt werden.

Vorteilhafterweise kann das Ermitteln des Ähnlichkeitsmaßes auf einen Verlauf angewandt werden, der zum Beispiel als eine Vielzahl quantitativer Werte repräsentiert ist. Dabei ergibt sich der Vorteil, dass auch trotz der in der Praxis vorhandener Datendefizite oder (Mess-)Toleranzen, Erfassungslücken in den ersten Fahrstreckenprofildaten oder in den zweiten Fahrstreckenprofildaten, ein passender Datenabschnitt gefunden werden kann und/oder eine präzise Dekodierungsinformation ermittelt werden kann.

Zum Ermitteln des oder mehrerer Ähnlichkeitsmaße können die Amplituden, Frequenzgänge oder sonstige Parameter der Verläufe physikalischer Fahrbahneigenschaften verändert, insbesondere auf passende Wertebereiche normiert oder gefiltert werden. Auch können die ersten und/oder zweiten Fahrstreckenprofildaten, die zumindest teilweise als eine Folge diskreter Werte vorliegen können, zum Ermitteln des Ähnlichkeitsmaßes interpoliert werden.

Auch kann das Ermitteln des oder mehrerer Ähnlichkeitsmaße aus bekannten oder wahrscheinlichen kausalen Zusammenhängen zwischen den physikalischen Fahrbahneigenschaften oder den zugrundeliegenden Messgrößen abgeleitet werden. Dabei kann das oder die Ähnlichkeitsmaße auch mit an sich bekannten Mitteln der Chaostheorie ermittelt werden.

Alternativ oder zusätzlich kann auch das Ähnlichkeitsmaß zwischen den entsprechenden Spektralwerten mittels eines Vergleichs von Spektralverteilungsfunktionen ermittelt werden, z. B. eine Verteilung diverser Frequenzen, beispielsweise bezogen auf eine Vibration, mit räumlichem oder zeitlichem Bezug. Hierzu kann eine oder mehrere Spektralverteilungen oder eine Spektralverteilungsfunktion von den ersten Fahrstreckenprofildaten ermittelt werden und ein Ähnlichkeitsmaß mit den kodierten zweiten Fahrstreckenprofildaten ermittelt werden.

Ein Datenabschnitt kann repräsentativ sein für einen Teil der Fahrstreckenprofildaten, beispielsweise einem geometrischen Bereich des Fahrstreckenabschnitts, und zum Beispiel 10 cm - 10 Meter umfassen.

Bei dem vorgegeben Fahrstreckenabschnitt handelt es sich vorzugsweise um einen Abschnitt einer von dem Fahrzeug befahrenen Fahrbahn, der in einem vorgegebenen Abstand vor dem Fahrzeug liegt oder mit einer ein vorgegebenes Maß übersteigenden Wahrscheinlichkeit in einer vorgegebenen Zeitspanne von dem Fahrzeug befahren wird. Die Fahrstreckenabschnitte können gleiche oder unterschiedlich große Abschnitte der Fahrstrecke umfassen. Diese können fest definierte oder variable oder krummlinige Grenzen aufweisen.

In einer vorteilhaften Ausgestaltung ist einem oder mehreren Datenabschnitten der kodierten zweiten Fahrstreckenprofildaten jeweils eine gespeicherte erste Positionsinformation zugeordnet und es wird eine Positionsinformation ermittelt, die repräsentativ ist für eine globale Position des vorgegebenen Fahrstreckenabschnitts, für den die ersten Fahrstreckenprofildaten ermittelt werden. Abhängig von der ermittelten Positionsinformation und den ersten Positionsinformationen wird eine Menge an Datenabschnitten der kodierten zweiten Fahrstreckenprofildaten, für die das Ähnlichkeitsmaß ermittelt wird, ausgewählt.

Vorteilhafterweise ermöglicht dies, eine zu untersuchende Datenmenge der kodierten zweiten Fahrstreckenprofildaten, vorerst zumindest grob, einzuschränken. Beispielsweise können auf einem Server die kodierten zweiten Fahrstreckenprofildaten von Gesamteuropa gespeichert sein. Wenn sich das Fahrzeug beispielsweise in der Knorrstraße in München befindet, können die kodierten zweiten Fahrstreckenprofildaten für die Knorrstraße einschließlich einiger möglicher oder als eine Fortsetzung der Route des Fahrzeugs in Frage kommenden Abzweigungen der Knorrstraße von dem Server an das Fahrzeug übertragen werden oder die Suche nach den zugehörigen kodierten zweiten Fahrstreckenprofildaten kann auf ein in Echtzeit und/oder effizient handhabbares Datenvolumen eingeschränkt werden. Eine Dekodierung und eine ("passgenaue") Anwendung der Verlaufsfunktionen lokalen physikalischen Eigenschaften, z. B. mit einer Auflösung von 2 cm bis 10 cm, kann dann mittels ermittelter Dekodierungsinformation erfolgen.

In einer weiteren vorteilhaften Ausgestaltung umfasst die Dekodierungsinformation eine oder mehrere der im Folgenden aufgelisteten Informationen:
- eine erste Information, die repräsentativ ist für eine räumliche Zuordnung der zweiten Fahrstreckenprofildaten zu einer aktuellen Position und/oder einer aktuellen Umgebung des Fahrzeugs,
- eine zweite Information, die repräsentativ ist für einen räumlichen und/oder zeitlichen Versatz zwischen den ersten Fahrstreckenprofildaten und zweiten Fahrstreckenprofildaten,
- eine dritte Information, die repräsentativ ist für eine räumliche Zuordnung der zweiten Fahrstreckenprofildaten zu einer Fahrstreckenspur oder Fahrstreckenstreifen entlang der Fahrstreckenspur,
- eine vierte Information, die repräsentativ ist für eine absolute Bezugsgröße oder einen Verlauf einer Bezugsgröße auf die sich die zumindest eine lokale physikalische Eigenschaft oder die Kodierung bezieht,
- eine fünfte Information, die repräsentativ ist für eine Zuordnung der zweiten Fahrstreckenprofildaten zu vordefinierten Mustern.

Bei den Informationen handelt es um Daten, die bei der Dekodierung einer jeweils mittels Fourier-Analyse kodierter Funktionen genutzt werden.

Die räumliche Zuordnung kann dabei bevorzugt zumindest zweidimensional ausgestaltet sein. In bestimmten Fällen kann sich diese auch eine Dimension, z.B. entlang einer Fahrstrecke, beziehen.

Besonders bevorzugt wird die erste Information als eine, insbesondere zweidimensionale Zuordnungsfunktion ermittelt, die eine Zuordnung der zweiten Fahrstreckenprofildaten zu einer aktuellen Position und/oder einer aktuellen Umgebung des Fahrzeugs in zumindest zwei räumlichen Richtungen (z.B. Länge und Breite bzw. längs und quer im Fahrzeugkoordinatensystem) repräsentiert.

Dabei kann eine räumliche Zuordnung bzw. Zuordnungsfunktion eine Vielzahl von Zuordnungspunkte und/oder einen oder mehrere Skalierungsmaße repräsentieren. Bevorzugt umfasst die räumliche Zuordnung dabei eine räumliche Abbildungsinformation oder Transformationsinformation bzw. Transformationsvorschrift, mit der eine räumliche Zuordnung einer in den zweiten Fahrstreckenprofildaten repräsentierten lokalen physikalischen Eigenschaft auf bestimmte Teile der Fahrstrecke erfolgen kann.

Die zumindest teilweise dekodierten zweiten Fahrstreckenprofildaten können dabei auch abhängig von einer zeitabhängigen Zuordnungsfunktion der Einwirkungen der Fahrstrecke auf das Fahrzeug ermittelt und bereitgestellt werden. Diese kann z.B. eine Sequenz oder eine Zeitfunktion umfassen, die eine zeitliche Zuordnung bestimmter (in der nahen Zukunft erwarteter) Einwirkungen der lokalen physikalischen Fahrbahneigenschaften auf das Fahrzeug repräsentiert. Eine solche zeitabhängige Zuordnungsfunktion kann abhängig von den aktuellen und/oder für die nahe Zukunft vorausermittelten odometrischen Daten des Fahrzeugs ermittelt werden. Die zeitabhängige Zuordnungsfunktion kann sich dabei auch auf einzelne Teile des Fahrzeugs, z.B. ein oder mehrere bestimmte Räder, beziehen.

Die vordefinierten Muster umfassen beispielsweise vorgegebene Spaltenfunktionen, Winkelverläufe und/oder vorgegebene Standard-Schlaglöcher. Die zweite Information hat den Vorteil, dass sie einfach aus einer Phasenverschiebung nach Ort und/oder Zeit zwischen der ersten Fahrstreckenprofildaten und der zweiten Fahrstreckenprofildaten ermittelt werden kann. Daraufhin kann ein geeigneter Datenabschnitt oder geeignete Datenabschnitte der kodierten zweiten Fahrstreckenprofildaten eingelesen werden und ein geeigneter, zu dem vorgegebenen Fahrstreckenabschnitt passender, Datenabschnitt dekodiert werden.

Bevorzugt wird die zweite Information, die repräsentativ ist für einen räumlichen und/oder zeitlichen Versatz zwischen den ersten Fahrstreckenprofildaten und zweiten Fahrstreckenprofildaten, abhängig von einem oder mehreren Ähnlichkeitsmaße ermittelt. Es kann z. B. das höchste Ähnlichkeitsmaß beim Verändern eines Werts für einen räumlichen und/oder zeitlichen Versatz ermittelt werden. Insbesondere kann dies anhand mathematischen Abhängigkeiten für die Kreuzkorrelation zweier Funktionen ermittelt werden.

Alternativ oder zusätzlich können mehrere Werte für einen räumlichen und/oder zeitlichen Versatz für zwei oder mehrere Datenabschnitte ermittelt werden, wobei ein insbesondere optimierter Mittelwert (arithmetischer, geometrischer, logarithmischer Mittelwert) zwischen diesen ermittelt wird.

Die resultierende Information zu dem Versatz kann für die Dekodierung oder weitere Verwendung bereitgestellt werden. Dabei kann, selbst mit teilweise lückenhaften Daten, eine sehr genaue räumliche oder zeitliche Zuordnung zwischen den ersten Fahrstreckenprofildaten und den zweiten Fahrstreckenprofildaten ermittelt werden.

Dies hat den Vorteil, dass Defizite der ersten und/oder der zweiten Fahrstreckenprofildaten (Messabweichungen, Fehler, Lücken, Amplituden oder Frequenzgangbegrenzungen) über eine Vielzahl der Werte oder eine kontinuierliche Verlaufsfunktion gemittelt werden können. Dabei kann die Dekodierungsinformation, insbesondere ein räumlicher und/oder zeitlicher Versatz oder die Zuordnung mit einer sehr viel höheren Genauigkeit ermittelt werden, als ein Vergleich eines oder einiger einzelner M esswerte und/oder räumlicher Positionen ergeben kann.

Ein räumlicher und/oder zeitlichen Versatz oder Information, die eine räumliche Zuordnung repräsentiert, kann bevorzugt auch in zumindest zwei Dimensionen, z. B. Längsrichtung und Querrichtung oder ein Abstandswert und ein Winkelwert, ermittelt werden.

Bevorzugt wird ein möglichst hohes Ähnlichkeitsmaß, z. B. in zwei oder mehreren Schritten, ermittelt, wobei ein am besten passender Datenabschnitt oder Bereich eines Datenabschnitts und/oder optimierte Datenabschnitte, z. B. besonders präzise Dekodierungsinformationen, ermittelt werden.

Mittels der Dekodierungsinformationen kann das Verfahren auch ohne eine genaue Eigenpositionsbestimmung im Fahrzeug und auch ohne einen genauen Pos itionsbezug der zweiten Fahrstreckenprofildaten mit einer hohen Präzision und Verlässlichkeit ausgeführt werden.

Vorzugsweise umfasst das Fahrzeug eine Rechenvorrichtung und die kodierten zweiten Fahrstreckenprofildaten werden mittels der Rechenvorrichtung im Fahrzeug dekodiert. Hierbei können Dekodierungsinformationen für mehrere Fahrbahnbereiche ermittelt werden, wobei daraufhin das Dekodieren der kodierten zweiten Fahrstreckenprofildaten lediglich für gewünschte Fahrbahnbereiche, zum Beispiel solche, die tatsächlich befahren werden, erfolgen kann. Alternativ oder zusätzlich kann die Dekodierungsinformation in dem Fahrzeug ermittelt werden und für ein weiteres Fahrzeug, zum Beispiel ein nachfolgendes Fahrzeug, bereitgestellt werden.

In einer weiteren vorteilhaften Ausgestaltung werden eine Spektralverteilung und/oder die Spektralverteilungsfunktion der ersten Fahrstreckenprofildaten ermittelt. Ein Ähnlichkeitsmaß zu zwei oder mehreren Spektralverteilungen und/oder Spektralverteilungsfunktionen der zweiten Fahrstreckenprofildaten werden ermittelt. Abhängig von einem oder mehreren Ähnlichkeitsmaßen erfolgt eine Auswahl eines oder mehrerer Datenabschnitte der zweiten Fahrstreckenprofildaten oder eine Zuordnung von Datenabschnitten der ersten Fahrstreckenprofildaten und der zweiten Fahrstreckenprofildaten.

In einer weiteren vorteilhaften Ausgestaltung ist die Spektralverteilung und/oder die Spektralverteilungsfunktion der zweiten Fahrstreckenprofildaten derart ermittelt, dass sie Mehrkanaldaten für zwei oder mehrere Kanäle repräsentiert, wobei ein jeweiliger Kanal der Mehrkanaldaten repräsentativ ist für einen jeweiligen Fahrstreckenstreifen.

Der jeweilige Fahrstreckenstreifen umfasst beispielsweise eine jeweilige Fahrspur. Alternativ kann der Fahrstreckenstreifen eine gesamte Straßenbreite umfassen, beispielsweise falls zur Ermittlung der Streckenprofildaten eine Stereokamera und/oder ein Laserscanner verwendet wird. Alternativ kann der jeweilige Fahrstreckenstreifen eine Breite von zirka 10 cm entlang der Fahrspur oder eine Breite eines Fahrzeugreifens aufweisen, beispielsweise falls zur Ermittlung der Streckenprofildaten eine mechanische Größe des Fahrzeugs verwendet wird.

In einer weiteren vorteilhaften Ausgestaltung repräsentiert die Spektralverteilung und/oder die Spektralverteilungsfunktion der zweiten Fahrstreckenprofildaten Mehrkanaldaten für zwei oder mehrere Kanäle und die ermittelte Dekodierungsinformation umfasst eine weitere Information, die repräsentativ ist für einen vorgegebenen Kanal, der eine vorgegebene Ähnlichkeitsbedingung für zumindest einen vorgegebenen Fahrstreckenabschnitt oder zumindest einen vorgegebenen Zeitabschnitt erfüllt. Vorteilhafterweise ermöglicht dies eine einfache Zuordnung der jeweiligen Mehrkanaldaten zu den Fahrstreckenstreifen im Fahrzeug. Die Dekodierungsinformation kann somit eine Information umfassen, welcher der Kanäle am besten zu den ersten Fahrstreckenprofildaten passt.

Erfindungsgemäß beziehen sich die ersten lokalen physikalischen Fahrbahneigenschaften und die zweiten lokalen physikalischen Fahrbahneigenschaften zumindest teilweise auf unterschiedliche physikalische Fahrbahneigenschaften oder Messgrößen.

Weiterhin erfindungsgemäß sind die ersten lokalen physikalischen Fahrbahneigenschaften zumindest teilweise einer ersten Klasse zugeordnet und die zweiten lokalen physikalischen Fahrbahneigenschaften sind zumindest teilweise einer zweiten Klasse zugeordnet, wobei sich die erste Klasse und die zweite Klasse derart unterscheiden, dass eine der Klassen lokale physikalische Fahrbahneige nschaften umfasst, die der Fahrbahn direkt zuordenbar sind und die andere Klasse lokale physikalische Fahrbahneigenschaften umfasst, die abhängig von einer spezifischen Eigenschaft des Fahrzeugs und/oder eines weiteren Fahrzeugs ermittelt wird. Dies hat den Vorteil, dass mittels der ersten (primitiven) Fahrstreckenprofildaten der ersten Klasse, die Zuordnung der zweiten Fahrstreckenprofildaten von einer oder mehreren zweiten Klassen zu der Umgebung des Fahrzeugs erfolgen kann.

In einer weiteren vorteilhaften Ausgestaltung repräsentiert die zumindest eine erste lokale physikalische Fahrbahne igenschaft und/oder die zumindest zweite lokale physikalische Fahrbahneigenschaft einen Verlauf einer lokalen Fahrbahnhöhe und/oder Fahrbahnkrümmung und/oder einen Verlauf von Querkräften, die auf das Fahrzeug oder ein weiteres Fahrzeug beim Befahren des Fahrstreckenabschnitts wirken, und/oder einen Verlauf eines Reibungskoeffizienten und/oder einen Verlauf eines lokalen Temperatur der Fahrbahn und/oder einen Verlauf zumindest einer mechanischen Kraft, die auf eine Komponente eines Fahrwerks des Fahrzeugs wirkt.

Dabei können unterschiedliche Kräfte (vertikale Kräfte, longitudinale Kräfte, Querkräfte) bzw. entsprechende räumliche und/oder zeitliche Verlaufsfunktionen, die jeweils auf mindestens ein bestimmtes Rad des Fahrzeugs wirken, separat oder zusammen betrachtet werden. Auch können sich die ersten Fahrstreckenprofildaten auf eine bestimmte Art von Kräften beziehen, z. B. auf solche die mit weniger Aufwand sensorisch erfassbar sind, und die zweiten Fahrstreckenprofildaten können sich auf eine andere Art von Kräften beziehen.

In einer weiteren vorteilhaften Ausgestaltung sind die Querkräfte abhängig von einem jeweiligen Geschwindigkeitswert des Fahrzeugs beziehungsweise des weiteren Fahrzeugs normiert.

In einer weiteren vorteilhaften Ausgestaltung werden die ersten Fahrstreckenprofildaten und/oder sind die zweiten Fahrstreckenprofildaten ermittelt abhängig von einem mit Mitteln des Fahrzeugs oder eines weiteren Fahrzeugs erfassten Verlauf eines Fahrstreckenreliefs, insbesondere eines oder mehrerer Fahrstreckenneigungswinkel und/oder einer oder mehrerer Fahrstreckenkrümmungen innerhalb des Fahrstreckenabschnitts.

Dabei ist das Fahrstreckenrelief bevorzugt als ein variabler Anteil einer Fahrzeughöhe innerhalb eines Fahrstreckenabschnitts zu verstehen. Dabei handelt es sich um Höhendifferenzen von bevorzugt weniger als +/- 5 cm oder +/- 10 cm. Dabei können die, z. B. durch eine ortsabhängigen Verlauf repräsentierten, Höhenunterschiede einen Abstand von weniger als +/- 10 cm oder +/- 50 cm zueinander aufweisen. Dies ist besonders vorteilhaft, da derartige Höhendifferenzen bei einer späteren Nutzung der Daten mit vorausschauenden Fahrwerksfunktionen für eine exaktere oder effizientere Regelung berücksichtigt beziehungsweise ausgeglichen werden können. Dabei kann eine solche Regelung eine Anpassung der Fahrzeugaktoren auf konkrete lokale physikalische Eigenschaften an ihrer jeweiligen Position ermitteln. Es kann auch eine vorausschauende Ansteuerung der Aktoren erfolgen, welche die lokalen physikalischen Eigenschaften in einem in der nahen Zukunft (zum Beispiel in den nächsten 0,1 bis 10 Sekunden) zu befahrenden Fahrstreckenabschnitt berücksichtigt. Somit kann auch die Totzeit der Aktorik, Einschwingzeit mechanischer, elektronischer oder hydraulischer Fahrzeugsysteme vorteilhaft berücksichtigt werden.

Bevorzugt wird das Fahrstreckenrelief als eine ortsbezogene Funktion der, beispielsweise relativen, lokalen Fahrbahnhöhe oder Fahrstreckenkrümmung, insbesondere gegenüber einer Bezugsgröße, die eine durchschnittliche Höhe eines Fahrstreckenabschnitts oder eine durchschnittliche Fahrstreckenkrümmung repräsentiert, dargestellt. Diese kann sich auch auf eine Größe, die eine Ortsinformation repräsentiert, bevorzugt eine Längs- und/oder Querrichtung einer Fahrbahn, oder auf eine Sensorposition relativ zu einer gemessenen Stelle beziehen.

Der Begriff Fahrstreckenkrümmung bezieht sich auf die Höhenkrümmung, insbesondere auf die Krümmungsmittelpunkte oberhalb oder unterhalb der Fahrstrecke. Dabei kann die Fahrstreckenkrümmung durch eine oder mehrere besonders stark ausgeprägte Krümmungen der Fahrbahn zum Beispiel als Funktion des Verlaufs der Krümmung in Längs- und/oder Querrichtung einer Fahrbahn beschrieben werden. Dabei handelt es sich um Krümmungen mit Radien von bevorzugt 0,1 bis 5 Meter. Dies ist besonders vorteilhaft, da solche Fahrbahnkrümmungen bei einer späteren Nutzung der Daten mit vorausschauenden stabilisierenden Funktionen für eine exaktere oder effizientere Regelung berücksichtigt beziehungsweise ausgeglichen werden können.

Bevorzugt wird der Verlauf des Fahrstreckenreliefs als eine, insbesondere zeitdiskrete Funktion erfasst. Der Verlauf des Fahrstreckenreliefs kann Messdaten umfassen, die repräsentativ sind für den Fahrstrecken-Höhenverlauf und/oder Fahrstrecken-Neigungswinkelverlauf und insbesondere absolut oder relativ sind, zum Beispiel Winkeldifferenzen aus einer Sensorperspektive.

Insbesondere kann dabei der Verlauf des Fahrstreckenreliefs aus unterschiedlichen Messverfahren ermittelt werden. Dabei kann der Verlauf des Fahrstreckenreliefs insbesondere ermittelt werden aus einer Kombination aus Daten einer Kamera und/oder Stereokamera, Messung einer mechanischen Größe an ein bis vier Rädern des Fahrzeugs und/oder einer Inertialsensorik des Fahrzeugs.

In einer weiteren vorteilhaften Ausgestaltung beziehen sich die ersten Fahrstreckenprofildaten und die zweiten Fahrstreckenprofildaten zumindest teilweise auf unterschiedliche Verlaufsrichtungen innerhalb eines Fahrstreckenabschnitts. Hierbei können sich die ersten Fahrstreckenprofildaten auf eine Längsrichtung beziehen und die zweiten Fahrstreckenprofildaten auf eine Querrichtung.

Dabei kann eine Längsrichtung als Richtung entlang eines Verlaufs einer Fahrstrecke oder einer Fahrrichtung des Fahrzeugs oder im Wesentlichen als Richtung entlang eines Verlaufs einer Fahrstrecke oder einer Fahrrichtung des Fahrzeugs definiert sein. Dabei kann eine Querrichtung als Richtung quer zum Verlauf einer Fahrstrecke oder der Fahrrichtung des Fahrzeugs oder im Wesentlichen als Richtung quer zum Verlauf einer Fahrstrecke oder der Fahrrichtung des Fahrzeugs definiert sein.

Dabei kann aus den, mit Mitteln des Fahrzeugs erfassten, vorzugsweise primitiven und/oder mit Hilfe aus einfacher Sensoren ermittelten ersten Fahrstreckenprofildaten, welche sich auf eine Längsrichtung beziehen, die Dekodierungsinformation für die detaillierten und aufwändigen bereitgestellten kodierten zweiten Fahrstreckenprofildaten, die sich auf die gleiche oder eine andere Verlaufsrichtung beziehen, zum Beispiel quer zu der Fahrtrichtung des Fahrzeugs, ermittelt werden.

In einer weiteren vorteilhaften Ausgestaltung beziehen sich die ersten Fahrstreckenprofildaten auf die ersten lokalen physikalischen Fahrbahneigenschaften eines ersten Fahrstreckenabschnitts und die Dekodierungsinformation für die zweiten Fahrstreckenprofildaten werden für einen zweiten Fahrstreckenabschnitt ermittelt, wobei der erste Fahrstreckenabschnitt und der zweite Fahrstreckenabschnitt unterschiedlich sind. Bevorzugt bezieht sich der erste Fahrstreckenabschnitt vollständig oder teilweise auf ein Fahrbahnteil unterhalb des Fahrzeugs oder auf ein weiteres Fahrbahnteil in nächster Umgebung zu dem Fahrbahnteil unter dem Fahrzeug. Beispielsweise bezieht sich der erste Fahrstreckenabschnitt auf einen Bereich von 6 m bis 7 m vor oder hinter dem Fahrzeug oder 3 m bis 4 m seitlich von dem Fahrzeug. Vorzugsweise bezieht sich das zweite Fahrstreckenteil auf einen in naher Zukunft von dem Fahrzeug zu befahrenden Fahrbahnbereich der 5 m bis 25 m oder 10 m bis 200 m vor dem Fahrzeug entlang der Fahrtrichtung des Fahrzeugs liegt. Hierbei wird abhängig von den ersten Fahrstreckenprofildaten den zweiten Fahrstreckenprofildaten der zweite Fahrstreckenabschnitt zugeordnet. Die ersten Fahrstreckenprofildaten können mit einem Sensor ermittelt werden, der von dem Fahrzeug nach unten oder nach hinten ausgerichtet ist. Die in dem Fahrzeug ermittelten ersten Fahrstreckenprofildaten können sich damit auf die "Vergangenheit" beziehen. Die Dekodierung der kodierten zweiten Fahrstreckenprofildaten erfolgt dabei beispielsweise für die vor dem Fahrzeug liegenden, noch zu befahrenden Fahrstreckenabschnitte, das heißt die zweiten Fahrstreckenprofildaten können sich auf die "Zukunft" beziehen.

In einer weiteren vorteilhaften Ausgestaltung werden die ersten Fahrstreckenprofildaten ermittelt, indem ein Verlauf von auf das Fahrzeug wirkende Vertikal- und/oder Querkräfte ermittelt wird. Vorzugsweise wird der Verlauf von den auf das Fahrzeug wirkenden Vertikal- und/oder Querkräften ermittelt abhängig von einem Verlauf einer mechanischen Größe innerhalb des Fahrzeugs. Bei dem Verlauf von den auf das Fahrzeug wirkenden Vertikal- und/oder Querkräften kann es sich um Krafteinwirkungen auf Teile des Fahrwerks handeln. Diese können mit Sensoren des Fahrwerks erfasst werden. Insbesondere betrifft der Verlauf der auf das Fahrwerk wirkenden Vertikal- und/oder Querkräfte auch Vibrationen, insbesondere einer bestimmten Art und/oder mit einer bestimmten Amplitude und/oder einem bestimmten Amplitudenverlauf. Die mechanischen Größen umfassen beispielsweise sensorisch erfassbare Bewegungen beziehungsweise Verschiebungen von Fahrzeugteilen zueinander. Die auf das Fahrzeug wirkenden Vertikal- und/oder Querkräfte spiegeln beispielsweise nicht nur einen Verlauf der Fahrstrecke wieder, sondern auch, welche Querkräfte auf das Fahrzeug an der betreffenden Stelle Einfluss nehmen. Diese Vertikal- und/oder Querkräfte sind somit beispielsweise auch für andere Zwecke, wie zum Beispiel zur Ermittlung einer Teile-Lebensdauer ode r einer jeweiligen Rest-Teil-Lebensdauer von Fahrzeugteilen nutzbar. Eine derart ermittelte Rest-Teil-Lebensdauer mehrerer unterschiedlicher Fahrzeugteile kann, zum Beispiel mittels einer Anzeigevorrichtung oder eines Diagnosegeräts, auslesbar und/oder in Zahlen, Symbolen oder grafisch darstellbar sein. Dadurch ist eine deutlich effizientere Nutzung betreffender Fahrzeugteile und eine Verbesserung der Sicherheit möglich. Diese Vertikal- und/oder Querkräfte können alternativ oder zusätzlich auch zu einer adaptiven Einstellung von Regelgrößen für Fahrassistenzsysteme genutzt werden.

In einer weiteren vorteilhaften Ausgestaltung werden die kodierten zweiten Fahrstreckenprofildaten von einem zweiten Fahrzeug bereitgestellt, welches sich in einer vorgegebenen Umgebung des Fahrzeugs befindet und/oder in einer vorgegebenen Richtung zum Fahrzeug fährt. Die kodierten zweiten Fahrstreckenprofildaten können hierbei unmittelbar bereitgestellt werden, das heißt beispielsweise über eine direkte Kommunikationsverbindung an das Fahrzeug übermittelt werden. Alternativ oder zusätzlich ist möglich, dass das Fahrzeug die kodierten Fahrzeugdaten an ein Backend sendet und die kodierten zweiten Fahrstreckenprofildaten von dem Backend an das Fahrzeug gesendet werden. Vorzugsweise wurden die zweiten Fahrstreckenprofildaten von dem zweiten Fahrzeug erfasst, als es in der Vergangenheit dieselbe Fahrtstrecke befahren hat wie das Fahrzeug.

Die zweiten Fahrstreckendaten können von dem zweiten Fahrzeug ermittelt und kodiert werden. Die von dem zweiten Fahrzeug bereitgestellten kodierten zweiten Fahrstreckenprofildaten können aktuell ermittelte zweite Fahrstreckenprofildaten repräsentieren oder historische Daten, das heißt zweite Fahrstreckenprofildaten, die in der Vergangenheit ermittelt wurden, als das zweite Fahrzeug zumindest teilweise dieselbe Fahrtstrecke wie das Fahrzeug befahren hat.

Vorzugsweise handelt es sich bei dem zweiten Fahrzeug um ein in Fahrtrichtung vorausfahrendes Fahrzeug in Bezug auf das Fahrzeug, das die kodierten zweiten Fahrstreckenprofildaten empfängt. Auch kann es sich bei dem zweiten Fahrzeug um ein entgegenkommendes Fahrzeug handeln. Vorteilhafterweise ist es so möglich, dass das Fahrzeug sehr präzise und/oder aktuelle zweite Fahrstreckenprofildaten nutzen kann, die von ihm selbst nicht erfassbar und/oder ermittelbar sind.

In einer weiteren vorteilhaften Ausgestaltung wird ein Fahrzeugprofil des Fahrzeugs bereitgestellt und abhängig von dem Fahrzeugprofil und den zweiten Fahrstreckenprofildaten wird eine Information ermittelt, die repräsentativ ist für zumindest ein Maß einer Einwirkung der lokalen physikalischen Fahrbahneigenschaften auf das Fahrzeug bei einem Befahren eines vorgegebenen lokalen Fahrstreckenabschnitts. Vorteilhafterweise ermöglicht dies, die Auswirkungen der Fahrstrecke auf das Fahrzeug zu ermitteln. Dabei können die zweiten Fahrstreckenprofildaten, die vorzugsweise fahrzeugunabhängig repräsentativ sind, auf das Fahrzeug angepasst werden, das heißt es werden fahrzeugunabhängige Dekodierungsinformationen ermittelt und bereitgestellt.

Das Fahrzeugprofil umfasst beispielsweise eine Empfindlichkeit zu verschiedenen spektralen Frequenzanteilen und/oder Bereichen der lokalen physikalischen Eigenschaft. Bevorzugt kann die Empfindlichkeit eine Schvvingungsübertragungsfunktion von der Fahrbahn auf die Fahrgastzelle umfassen. Insbesondere kann die Schwingungsübertragungsfunktion auch geschwindigkeitsabhängig sein.

In einer weiteren vorteilhaften Ausgestaltung repräsentieren die ersten Fahrstreckenprofildaten und/oder zweiten Fahrstreckenprofildaten jeweils einen veränderlichen Anteil lokaler physikalischer Fahrbahneigenschaften eines Fahrstreckenabschnitts.

In einer weiteren vorteilhaften Ausgestaltung repräsentieren die ersten Fahrstreckenprofildaten und/oder zweiten Fahrstreckenprofildaten jeweils eine Verteilungsfunktion oder Verlaufsfunktion der Fahrstreckenfeuchtigkeit und/oder eine Verteilungsfunktion oder Verlaufsfunktion der Fahrstreckentemperatur und/oder eine Verteilungsfunktion oder Verlaufsfunktion des Reibungskoeffizienten. Die ersten Fahrstreckenprofildaten und/oder zweiten Fahrstreckenprofildaten können somit jeweils einen statischen und/oder veränderlichen Anteil lokaler physikalischer Fahrbahneigenschaften eines Fahrstreckenabschnitts repräsentieren. Besonders vorteilhaft können die veränderlichen Anteile lokaler physikalischer Fahrbahneigenschaften genutzt werden, wenn beispielsweise die zweiten Fahrstreckenprofildaten von einem vorausfahrenden Fahrzeug bereitgestellt werden und die zweiten Fahrstreckenprofildaten somit sehr aktuell bereitgestellt werden können.

In einer weiteren vorteilhaften Ausgestaltung wird in dem Fahrzeug in Abhängigkeit von den dekodierten zweiten Fahrstreckenprofildaten mindestens einer der folgenden Schritte durchgeführt:
- aktive Steuerung von vertikaldynamischer Dämpfung und/oder Beschleunigungseinwirkung auf eine Fahrgastzelle des Fahrzeugs, und/oder
- Veränderung einer Funktion, die ein auf das Lenkrad des Fahrzeugs wirkendes Drehmoment abhängig von der Krafteinwirkung der lokalen physikalischen Eigenschaft einer Fahrstrecke auf zumindest ein Rad des Fahrzeugs steuert, und/oder
- Veränderung zumindest einer Fahrzeugfunktion zur teilautomatisierten Längsführung und/oder Querführung des Fahrzeugs.

In einer weiteren vorteilhaften Ausgestaltung wird in dem Fahrzeug in Abhängigkeit von den dekodierten zweiten Fahrstreckenprofildaten mindestens einer der folgenden Schritte durchgeführt:
- Ermitteln einer voraussichtlichen Krafteinwirkung und/oder Amplitude einer Einwirkung vorgegebener lokaler Fahrbahneigenschaften auf zumindest ein vorgegebenes Rad des Fahrzeugs beim Befahren des Fahrstreckenabschnitts, insbesondere in Bezug auf eine Ortsinformation oder Zeitinformation,
- Ansteuerung zumindest eines Aktors des Fahrzeugs abhängig von der vorausermittelten Krafteinwirkung und/oder Amplitude.

Vorteilhafterweise kann das Ansteuern zumindest eines Aktors zeitlich noch vor der Einwirkung lokaler physikalischen Eigenschaften der Fahrstreckenabschnitts erfolgen. Beispielsweise kann bei der Ansteuerung einer aktiven Federdämpfung die Parameter betreffend eine Federung und/oder Dämpfung in einem bestimmten Zeitintervall, insbesondere das Verhältnis zwischen Dämpfung und Federung oder eine zeitliche Abfolge oder Zeitfunktion der Dämpfung, z. B. auch abhängig von einer ermittelten Zeitinformation, variiert werden. Mit anderen Worten: Auch Parameter der Phasen mit mehr oder minder stärken Dämpfung können abhängig von den bereitgestellten zweiten Fahrstreckenprofildaten gesteuert werden.

Dabei können unnötige Energieverluste, die insbesondere durch eine Dämpfung entstehen, wesentlich reduziert werden.

Auch kann ein vorausschauender Aufbau einer erforderlichen Gegen kraft für zumindest ein Rad des Fahrzeugs erfolgen. Mit anderen Worten, es kann ein quantitativ dosiertes gezieltes Gegenwirken, z. B. in Form einer entsprechenden Zeitfunktion, erfolgen, wobei die Maßnahmen zum Gegenwirken insbesondere noch vor der Einwirkung lokaler physikalischen Eigenschaften des Fahrstreckenabschnitts angewandt werden können. Dadurch kann unter anderem auch die erforderliche Leistung der Aktoren reduziert werden, z. B. weil die erforderliche Energie über eine längere Zeit und ggf. auch effizienter aufgebracht werden kann.

Ferner kann auch eine weitere unmittelbare oder mittelbare Nutzung der bereitgestellten Daten auch in weiteren, zum Teil bereits bekannten Fahrerassistenzsystemen vorgesehen sein. Dabei können z. B. Parameter und Funktionsweise von einem Spurführungsassistenten, Lenkunterstützung, Automatic Cruse Controll, einem zumindest teilweise automatisierten Fahren, etc. variiert werden.

Ein besonderer Vorteil ergibt sich insbesondere aus der Verbindung der Fahrstreckenprofildaten, die permanente physikalische Eigenschaften und veränderliche physikalische Eigenschaften repräsentieren. Es können sich z. B. auch die ersten Fahrstreckenprofildaten auf die permanente (leichter sensorisch erfassbare) physikalische Eigenschaften beziehen und die ermittelten zweiten Fahrstreckenprofildaten können sich (auch) auf die veränderliche physikalische Eigenschaften beziehen.

Ein weiterer besonderer Vorteil ergibt sich aus der Verbindung lokaler Daten des Fahrstreckenprofils mit globalen Eigenschaften, die sich zum Beispiel auf einen wesentlich größeren Straßenabschnitt oder die Route des Fahrzeugs beziehen.

In einer weiteren vorteilhaften Ausgestaltung weist die Vorrichtung zumindest einen portablen Teil auf, der ausgestaltet ist, mittels einer Schnittstelle Daten aus einem Fahrzeugbordnetz zu ermitteln und/oder Daten aus einer Navigationskarte oder einer externen Datenbank zu ermitteln, und einen oder mehrere weitere Schritte des Verfahrens zur Bereitstellung von Daten eines Fahrstreckenprofils in einem Fahrzeug und/oder einer vorteilhafte Ausgestaltung des Verfahrens zur Bereitstellung von Daten eines Fahrstreckenprofils in einem Fahrzeug auszuführen.

Der portable Teil der Vorrichtung kann beispielsweise in einem Smartphone, einem Tablet-PC und/oder einem mobilen Navigationsgerät ausgebildet sein.

Gemäß einem weiteren Aspekt zeichnet sich die Erfindung aus durch ein Computerprogramm, wobei das Computerprogramm ausgebildet ist, das Verfahren zur Bereitstellung von Daten eines Fahrstreckenprofils in einem Fahrzeug oder eine vorteilhafte Ausgestaltung des Verfahrens zur Bereitstellung von Daten eines Fahrstreckenprofils in einem Fahrzeug auf einer Datenverarbeitungsvorrichtung durchzuführen.

Gemäß einem weiteren Aspekt zeichnet sich die Erfindung aus durch ein Computerprogrammprodukt, das ausführbaren Programmcode umfasst, wobei der Programmcode bei Ausführung durch eine Datenverarbeitungsvorrichtung das Verfahren zur Bereitstellung von Daten eines Fahrstreckenprofils in einem Fahrzeug oder eine vorteilhafte Ausgestaltung des Verfahrens zur Bereitstellung von Daten eines Fahrstreckenprofils in einem Fahrzeug ausführt.

Das Computerprogrammprodukt umfasst insbesondere ein von der Datenverarbeitungsvorrichtung lesbares Medium, auf dem der Programmcode gespeichert ist.

Gemäß einem weiteren Aspekt zeichnet sich die Erfindung aus durch ein Programmprodukt, das ein autorisiertes Zugriffsrecht auf abgelegte Daten des Computerprogrammprodukts umfasst.

Bei dem Fahrzeug handelt es sich im Rahmen der Erfindung bevorzugt um ein Kraftfahrzeug oder Motorrad. Somit entstehen mehrere oben diskutierte Vorteile und mehrere weitere für den Fachmann nachvollziehbare Vorteile. Das Fahrzeug kann auch ein Wasserfahrzeug sein, wobei ein Teil des Meeresbodens und/oder der Wasserschichten der Fahrstrecke entspricht, die zum Beispiel wirtschaftlich genutzt werden können. Das Fahrzeug kann auch ein Luft- oder Raumfahrzeug sein, wobei die entsprechende Fahrstrecke ein Teil einer Planetenoberfläche, Atmosphärenschichten oder der Planentenschichten ist. Solche Anwendungen, zum Beispiel zur Erfassung und Übertragung der (bis zu feinen Details aufgelösten) lokalen physikalischen Eigenschaften von Planeten oder sonstiger Himmelskörper sind sehr vorteilhaft, weil die Fahrstreckenprofildaten in einer äußerst kompakten Form übertragen werden können.

Ausführungsbeispiele der Erfindung sind im Folgenden anhand der schematischen Zeichnungen näher erläutert.

Es zeigen:
- Figur 1: ein System zur Bereitstellung von Daten eines Fahrstreckenprofils in einem Fahrzeug,
- Figur 2: ein Ablaufdiagramm eines Programms zur Bereitstellung von Daten eines Fahrstreckenprofils in einem Fahrzeug und
- Figur 3: ein weiteres System zur Bereitstellung von Daten eines Fahrstreckenprofils in einem Fahrzeug,
- Figur 4: einen beispiel haften Verlauf von ersten Fahrstreckenprofildaten und zweiten Fahrstreckenprofildaten und
- Figur 5: einen weiteren beispielhaften Verlauf von ersten Fahrstreckenprofildaten und zweiten Fahrstreckenprofildaten.

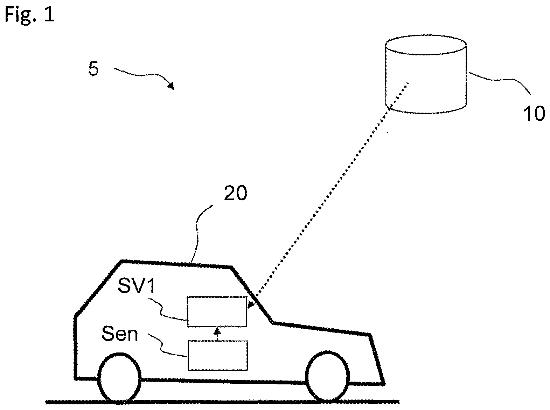

Figur 1 zeigt ein System 5 zur Bereitstellung von Daten eines Fahrstreckenprofils in einem Fahrzeug.

Das System 5 weist eine Recheneinrichtung auf, die auch als Vorrichtung zur Bereitstellung von Daten eines Fahrstreckenprofils in einem Fahrzeug bezeichnet werden kann. Die Recheneinrichtung kann, wie beispielhaft in Figur 1 gezeigt, als eine erste Fahrzeugsteuervorrichtung SV1, die in einem ersten Fahrzeug 20 angeordnet ist, ausgebildet sein. Alternativ kann die Recheneinrichtung zwei oder mehrere verteilte Elemente umfassen (nicht gezeigt in Figur 1). Beispielsweise kann die Recheneinrichtung die erste Fahrzeugsteuervorrichtung SV1, die in dem ersten Fahrzeug 20 angeordnet ist, und eine zweite Fahrzeugsteuervorrichtung, die in einem zweiten Fahrzeug 30 angeordnet ist, und/oder eine externe Steuervorrichtung, die in einem Backend angeordnet ist, umfassen.

Des Weiteren weist das System 5 eine Sensorvorrichtung Sen auf, die, wie in Figur 1 gezeigt, beispielsweise in dem ersten Fahrzeug 20 angeordnet ist. Die Sensorvorrichtung Sen ist ausgebildet, Daten zu erfassen und für die erste Fahrzeugsteuervorrichtung SV1 bereitzustellen zur Ermittlung
erster Fahrstreckenprofildaten, die repräsentativ sind für zumindest eine erste lokale physikalische Fahrbahneigenschaft des vorgegebenen Fahrstreckenabschnitts. Alternativ kann die Sensorvorrichtung Sen in dem zweiten 30 oder einem weiteren Fahrzeug angeordnet sein.

Das System 5 weist ferner eine Speichereinrichtung 10 auf, die ausgebildet ist, kodierte zweite Fahrstreckenprofildaten zu speichern und bereitzustellen. Die Speichereinrichtung 10 kann, wie in Figur 1 gezeigt, beispielsweise einen Server in einem Backend umfassen. Die Speichereinrichtung 10 kann alternativ in dem ersten Fahrzeug 20 oder dem zweiten Fahrzeug 30 und/oder einem weiteren Fahrzeug angeordnet sein. Alternativ kann die Speichereinrichtung 10 als verteiltes System ausgebildet sein und beispielsweise mindestens zwei Elemente der folgenden Aufzählung umfassen: einen oder mehrere mobile Datenträger, eine im Backend angeordnete Speichervorrichtung, eine in dem zweiten Fahrzeug 30 angeordnete Speichervorrichtung, eine in dem ersten Fahrzeug 20 angeordnete Speichervorrichtung.

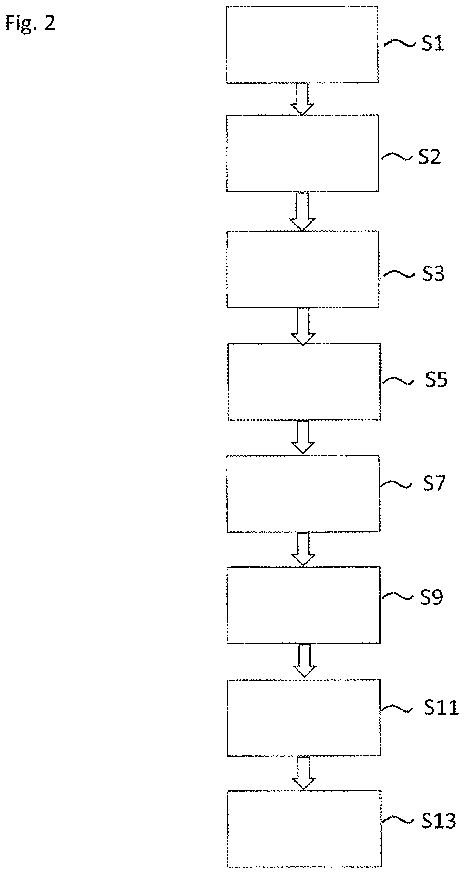

Figur 2 zeigt ein Ablaufdiagramm eines Programms zur Bereitstellung von Daten eines Fahrstreckenprofils in dem ersten Fahrzeug 20. Das Programm kann beispielsweise mittels der ersten Fahrzeugsteuervorrichtung SV1 abgearbeitet werden, die insbesondere mindestens eine Recheneinheit, einen Programm- und Datenspeicher sowie beispielsweise eine oder mehrere Kommunikationsschnittstellen aufweist und die in dem ersten Fahrzeug 20 angeordnet ist. Der Programm- und Datenspeicher und die Recheneinheit der ersten Fahrzeugsteuervorrichtung SV1 können in einer Baueinheit und/oder verteilt auf mehrere Baueinheiten ausgebildet sein.

Nach dem Starten des Programms wird das Programm in einem Schritt S1 fortgesetzt, nachdem beispielsweise Variablen initialisiert wurden.

In dem Schritt S1 werden bereitgestellte Daten einer vorgegebenen Sensorvorrichtung eingelesen und abhängig von den bereitgestellten Daten werden erste Fahrstreckenprofildaten ermittelt. Die ersten Fahrstreckenprofildaten werden beispielsweis mittels der Sensorvorrichtung Sen des ersten Fahrzeugs 20 erfasst. Die ersten Fahrstreckenprofidaten sind hierbei repräsentativ für zumindest eine erste lokale physikalische Fahrbahne igenschaft eines vorgegebenen Fahrstreckenabschnitts.

In einem Schritt S3 werden bereitgestellte kodierte zweite Fahrstreckenprofildaten eingelesen, die sich zumindest teilweise auf den vorgegebenen Fahrstreckenabschnitt, für den die ersten Fahrstreckenprofildaten ermittelt wurden, beziehen, wobei die kodierten zweiten Fahrstreckenprofildaten eine abhängig von zweiten Fahrstreckenprofildaten ermittelte Spektralverteilung und/oder Spektralverteilungsfunktion umfassen und die zweiten Fahrstreckenprofildaten repräsentativ sind für zumindest eine zweite lokale physikalische Fahrbahneigenschaft. Die kodierten zweiten Fahrstreckenprofildaten werden beispielsweise von dem Server im Backend bereitgestellt.

Die ersten lokalen physikalischen Fahrbahneigenschaften und die zweiten lokalen physikalischen Fahrbahneigenschaften beziehen sich zumindest teilweise auf unterschiedliche physikalische Fahrbahneigenschaften oder Messgrößen. Die ersten lokalen physikalischen Fahrbahneigenschaften sind zumindest teilweise einer ersten Klasse zugeordnet und die zweiten lokalen physikalischen Fahrbahneigenschaften sind zumindest teilweise einer zweiten Klasse zugeordnet, wobei die erste Klasse und die zweite Klasse sich derart unterscheiden, dass eine der Klassen lokale physikalische Fahrbahneigenschaften umfasst, die der Fahrbahn direkt zuordenbar sind und die andere Klasse lokale physikalische Fahrbahneige nschaften umfasst, die abhängig von einer spezifischen Eigenschaft des Fahrzeugs und/oder eines weiteren Fahrzeugs ermittelt wird.

Die erste lokale physikalische Fahrbahneigenschaft und/oder die zumindest zweite lokale physikalische Fahrbahneigenschaften kann einen Verlauf einer lokalen Fahrbahnhöhe und/oder Fahrbahnkrümmung und/oder einen Verlauf von Querkräften, die auf das Fahrzeug oder ein weiteres Fahrzeug beim Befahren des Fahrstreckenabschnitts wirken, und/oder einen Verlauf eines Reibungskoeffizienten und/oder einen Verlauf einer lokalen Temperatur der Fahrbahn und/oder einen Verlauf zumindest einer mechanischen Kraft, die auf eine Komponente eines Fahrwerks des Fahrzeugs wirkt, repräsentieren.

Die ersten Fahrstreckenprofildaten und/oder die zweiten Fahrstreckenprofildaten können beispielsweise jeweils eine Verteilungsfunktion oder Verlaufsfunktion der Fahrstreckenfeuchtigkeit und/oder eine Verteilungsfunktion oder Verlaufsfunktion der Fahrstreckentemperatur und/oder eine Verteilungsfunktion oder Verlaufsfunktion des Reibungskoeffizienten repräsentieren.

In einem Schritt S5 wird ein Ähnlichkeitsmaß zwischen einem oder mehreren in den ersten Fahrstreckenprofildaten und den kodierten zweiten Fahrstreckenprofildaten repräsentierten Verlauf zumindest einer physikalischen Eigenschaft und/oder Spektralverteilungsfunktion zumindest einer physikalischen Eigenschaften ermittelt.

Hierzu wird beispielsweise ein Datenabschnitt der kodierten zweiten Fahrstreckenprofildaten dekodiert und das Ähnlichkeitsmaß und/oder eine Kreuzkorrelationsfunktion zwischen den ersten Fahrstreckenprofildaten und den dekodierten zweiten Fahrstreckenprofildaten des Datenabschnitts ermittelt.

Alternativ kann eine Spektralverteilung oder einer Spektralverteilungsfunktion zu den ersten Fahrstreckenprofildaten ermittelt werden. Dies kann als ein Kodieren eines Datenabschnitts der ersten Fahrstreckenprofildaten (in ein Kodierformat, passend zu der Kodierung der zweiten Fahrstreckenprofildaten) erfolgen. Das Ähnlichkeitsmaß oder die Kreuzkorrelationsfunktion kann dann zwischen den kodierten ersten Fahrstreckenprofildaten und den kodierten zweiten Fahrstreckenprofildaten ermittelt werden.

Das Ermitteln eines oder mehrerer Ähnlichkeitsmaße kann beispielsweise außerhalb des Fahrzeugs, z. B. in einem Backend, erfolgen.

In einem Schritt S7 wird abhängig von dem Ähnlichkeitsmaß eine Dekodierungsinformation für die kodierten zweiten Fahrstreckenprofildaten ermittelt. Die Dekodierungsinformation umfasst beispielsweise eine Information, die repräsentativ ist für eine Phasenverschiebung, das heißt für einen räumlichen und/oder zeitlichen Versatz zwischen den ersten Fahrstreckenprofildaten und den zweiten Fahrstreckenprofildaten. Abhängig von der Dekodierungsinformation kann eine gezielte Dekodierung und Anwendung der kodierten zweiten Fahrstreckenprofildaten für einen oder mehrere vorgegebene, insbesondere relevante, Fahrstreckenabschnitte erfolgen.

Beispielsweise können sich die ersten Fahrstreckenprofildaten auf die ersten lokalen physikalischen Fahrbahneigenschaften eines ersten Fahrstreckenabschnitts beziehen und die zweiten Fahrstreckenprofildaten auf die zweiten lokalen physikalischen Fahrbahneigenschaften eines zweiten Fahrstreckenabschnitts. Der erste und zweite Fahrstreckenabschnitt kann gleich oder unterschiedlich sein. Beispielsweise kann die Dekodierungsinformation für die zweiten Fahrstreckenprofildaten für den zweiten Fahrstreckenabschnitt ermittelt werden, wobei der erste Fahrstreckenabschnitt und der zweite Fahrstreckenabschnitt unterschiedlich sind.

Dies ermöglicht beispielsweise, dass Fahrstreckenprofile mit Hilfe der ersten Fahrstreckenprofildaten "in die Zukunft", zum Beispiel "um die Kurve", transformiert werden können. Somit kann zum Beispiel ein Fahrwerk des Fahrzeugs sich rechtzeitig auf ein bestimmtes Fahrbahnprofil, zum Beispiel auch bestimmte Unebenheiten, vorbereiten und so einen Fahrkomfort, eine Sicherheit oder Energieeffizienz erhöhen.

In einem Schritt S9 werden abhängig von der Dekodierungsinformation die kodierten zweiten Fahrstreckenprofildaten zumindest teilweise dekodiert und bereitgestellt.

In einem optionalen Schritt S2, der vor dem Schritt S3 ausgeführt wird, wird eine Positionsinformation ermittelt, die repräsentativ ist für eine globale Position des vorgegebenen Fahrstreckenabschnitts, für den die ersten Fahrstreckenprofildaten ermittelt werden, und abhängig von der ermittelten Positionsinformation und einer gespeicherten ersten Positionsinformationen, die jeweils den jeweiligen Datenabschnitten der kodierten zweiten Fahrstreckenprofildaten zugeordnet ist, wird eine Menge an Datenabschnitten der kodierten zweiten Fahrstreckenprofildaten, für die das Ähnlichkeitsmaß ermittelt wird, ausgewählt.

Dies hat den Vorteil, dass beispielsweise abhängig von einer mit einem Navigationsgerät des ersten Fahrzeugs erfassten Position des ersten Fahrzeugs zumindest in einer ersten, groben, Auswahl die Datenabschnitte bereitgestellt und eingelesen werden können, die für eine Dekodierung relevant sind.

Durch die Findung des Ähnlichkeitsmaßes kann die erste Fahrzeugsteuervorrichtung SV1 des ersten Fahrzeugs alternativ oder zusätzlich präziser ermitteln, welcher Teil der kodierten zweiten Fahrstreckenprofildaten tatsächlich dekodiert werden soll, womit eine Datenreduktion möglich ist und Rechenleistungsressourcen eingespart werden können.

In einem optionalen Schritt S11 wird beispielsweis ein Fahrzeugprofil des Fahrzeugs bereitgestellt und abhängig von dem Fahrzeugprofil und den zweiten Fahrstreckenprofildaten wird eine Information ermittelt, die repräsentativ ist für zumindest ein Maß einer Einwirkung der lokalen physikalischen Fahrbahneigenschaften auf das Fahrzeug bei einem Befahren eines vorgegebenen lokalen Fahrstreckenabschnitts. Besonders bevorzugt wird eine ortsbezogene und/oder zeitbezogene Funktion ermittelt, die repräsentativ ist für ein Maß einer oder mehrerer Einwirkungen, bzw. Einwirkungen von zumindest zwei unterschiedlichen Arten.

In einem optionalen Schritt S13 wird in Abhängigkeit von den dekodierten zweiten Fahrstreckenprofildaten mindestens eine aktive Steuerung einer vertikaldynamischen Dämpfung und/oder eine Beschleunigungseinwirkung auf eine Fahrgastzelle des Fahrzeugs und/oder eine Veränderung einer Funktion, die ein auf das Lenkrad des Fahrzeugs wirkendes Drehmoment abhängig von der Kraftwirkung der lokalen physikalischen Eigenschaft der Fahrstrecke auf zumindest ein Rad des Fahrzeugs steuert, und/oder eine Veränderung zumindest einer Fahrzeugfunktion zur teilautomatisierten Längsführung undloder Querführung des Fahrzeugs ausgeführt.

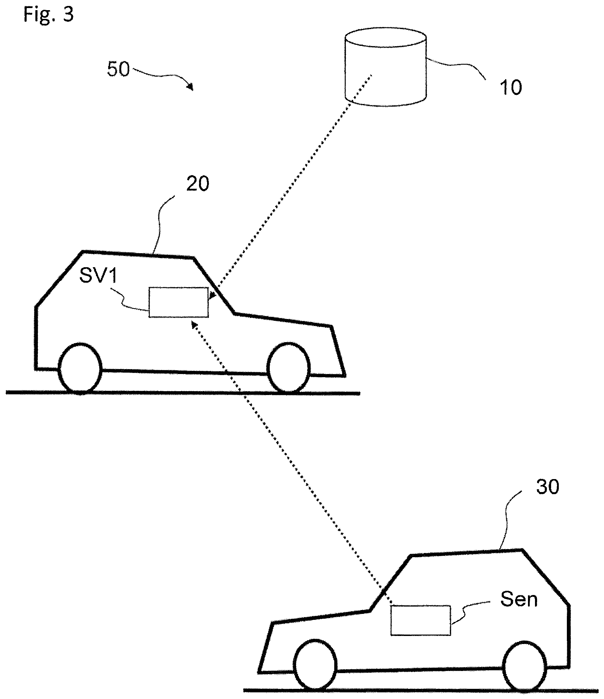

Figur 3 zeigt ein weiteres System 50 zur Bereitstellung von Daten des Fahrstreckenprofils in einem Fahrzeug.

In dem in Figur 3 gezeigten Beispiel weist das zweite Fahrzeug 30 die Sensorvorrichtung Sen auf. Die ersten Fahrstreckenprofildaten können von dem zweiten Fahrzeug 30 erfasst werden und an das erste Fahrzeug 20 gesendet werden. Die erste Fahrzeugsteuervorrichtung SV1 des ersten Fahrzeugs 20 kann ausgebildet sein, die Dekodierungsinformation zu ermitteln und die kodierten zweiten Fahrstreckenprofildaten zu dekodieren und für eine Nutzung für das erste Fahrzeug 20 und/oder zweite Fahrzeug 30 bereitzustellen.

Eine fahrzeugeigene Sensorvorrichtung Sen, die typischerweise große Stückkosten verursacht, muss somit nicht in jedem Nutzer-Fahrzeug angeordnet sein.

Die ersten Fahrstreckenprofildaten werden insbesondere genutzt als eine Art "Zünder" zu einer Dekomprimierung (beziehungsweise Entschlüsselung und Zuordnung) der bereitgestellten kodierten zweiten Fahrstreckenprofildaten.

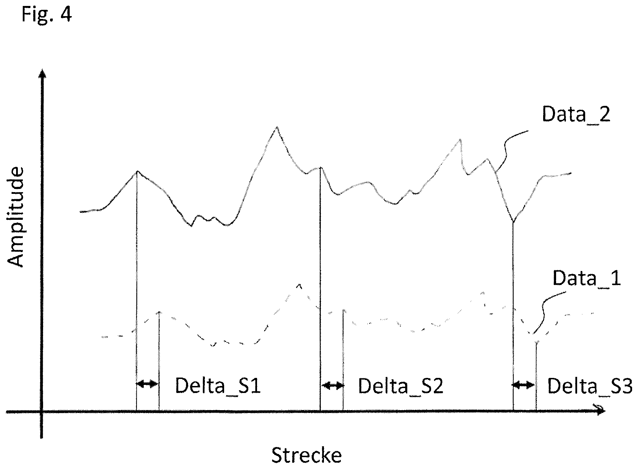

Figur 4 zeigt einen beispielhaften ersten Verlauf Data_1 der ersten Fahrstreckenprofildaten. In dem gezeigten Beispiel liegen die ersten Fahrstreckenprofildaten in "schlechter Qualität" vor, zum Beispiel zeitdiskret und/oder grob quantisiert und/oder mit eingeschränktem Amplituden- und/oder Frequenzbereich. Figur 4 zeigt ferner einen beispielhaften zweiten Verlauf Data_2 der zweiten Fahrstreckenprofildaten, die in guter oder einer wesentlich höheren Qualität vorliegen.

Die Verläufe Data_1, Data_2 der ersten und zweiten Fahrstreckenprofildaten weisen in dem in Figur 4 gezeigten Beispiel einen räumlichen Versatz auf Delta_S1, Delta_S2, Delta_S3 auf. Der räumliche Versatz Delta S1, Delta S2, Delta S3 wird vorzugsweise bei einer echtzeitfähigen Nutzung der ersten und/oder zweiten Fahrstreckendaten im Fahrzeug berücksichtigt. So wird beispielsweise für jedes Rad eine Funktion ermittelt, die eine Zeitfunktion einer Krafteinwirkung auf das jeweilige Rad repräsentiert.

Die Figur 4 veranschaulicht das Prinzip der Minimierung einer resultierenden Gesamtabweichung, die sehr viel kleiner sein kann, als die einzelnen Abweichungen von den einzelnen Versatz-Werten sowie von den weiteren ermittelten Daten.

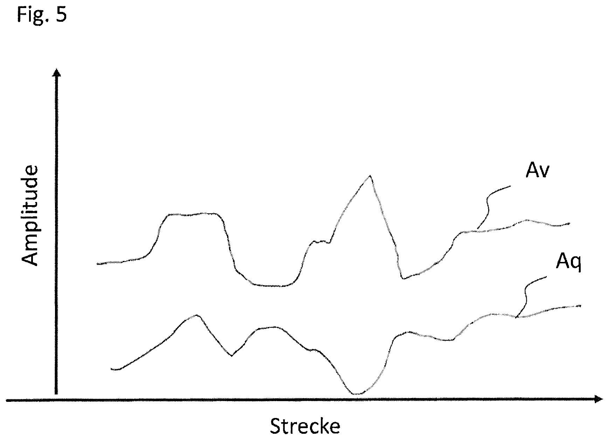

Figur 5 zeigt einen jeweiligen beispielhaften Verlauf der ersten und zweiten Fahrstreckenprofildaten, beispielsweise einen Verlauf von Vertikalkräften Av und einen Verlauf von Querkräften Aq.

Hier repräsentieren die ersten Fahrstreckenprofildaten zum Beispiel den Verlauf der Vertikalkräfte Av in Bezug auf eine relative Ortsinformation (kann ebenso eine relative Zeitinformation sein), die auf ein Rad des Fahrzeugs in eine vertikale Richtung wirken. Diese können im Fahrzeug sehr einfach erfasst werden.

Die zweiten Fahrstreckenprofildaten repräsentieren beispielsweise den ortsbezogenen Verlauf der Querkräfte Aq, die auf ein Rad des Fahrzeugs in eine Querrichtung wirken. Diese können im Fahrzeug nicht so einfach erfasst werden.

Durch eine optionale zusätzliche Aggregation der ersten und zweiten Daten wird beispielsweise eine ortsbezogene oder zeitbezogene Funktion ermittelt, die das Einwirken mehrerer Kräfte auf ein Rad des Fahrzeugs zu einer bestimmten Zeit, z. B. kleiner als in den nächsten 0,1, 0,3, 0,5, 1 Sekunde, wirken wird.

Bevorzugt kann abhängig von der ermittelten Funktion eine selektive Übertragung und/oder Kompensation der Kräfte/Beschleunigungen auf die Fahrgastzelle des Fahrzeugs eingestellt oder variiert werden. Dabei können bestimmte Krafteinwirkungen, insbesondere Vibrationen, insbesondere selektiv je nach Frequenzen oder nach weiteren Parametern gedämmt und/oder unbeeinflusst gelassen und/oder gezielt verstärkt werden.

### Bezugszeichenliste

- 5: System
- 10: Speichervorrichtung
- 20: erstes Fahrzeug
- 30: zweites Fahrzeug
- 50: weiteres System
- Aq: Verlauf der Querkräfte
- Av: Verlauf der Vertikalkräfte
- Data_1: erster Verlauf der ersten Fahrstreckenprofildaten
- Data_2: zweiter Verlauf der zweiten Fahrstreckenprofildaten
- Delta_S1, Delta_S2, Delta_s3: räumlicher Versatz
- Sen: Sensorvorrichtung
- SV1: erste Fahrzeugsteuervorrichtung
- S1,...,S13: Programmschritte

## Patentansprüche

1. Verfahren zur Bereitstellung von Daten eines Fahrstreckenprofils in einem Fahrzeug (20), bei dem
- für einen vorgegebenen Fahrstreckenabschnitt erste Fahrstreckenprofildaten ermittelt werden (S1), abhängig von Daten, die mittels einer vorgegebenen Sensorvorrichtung (SEN) des Fahrzeugs (20) oder eines weiteren Fahrzeugs (30) erfasst werden, wobei die ersten Fahrstreckenprofildaten repräsentativ sind für zumindest eine erste lokale physikalische Fahrbahneigenschaft des vorgegebenen Fahrstreckenabschnitts,
- bereitgestellte kodierte zweite Fahrstreckenprofildaten eingelesen werden (S3), die sich zumindest teilweise auf den vorgegebenen Fahrstreckenabschnitt beziehen, wobei die kodierten zweiten Fahrstreckenprofildaten eine abhängig von zweiten Fahrstreckenprofildaten ermittelte Spektralverteilung und/oder Spektralverteilungsfunktion umfassen und die zweiten Fahrstreckenprofildaten repräsentativ sind für zumindest eine zweite lokale physikalische Fahrbahneigenschaft,
- ein Ähnlichkeitsmaß zwischen einem oder mehreren in den ersten Fahrstreckenprofildaten und den kodierten zweiten Fahrstreckenprofildaten repräsentierten Verlauf zumindest einer physikalischen Eigenschaft und/oder Spektralverteilungsfunktion zumindest einer physikalischen Eigenschaft ermittelt wird (S5),
- abhängig von dem Ähnlichkeitsmaß eine Dekodierungsinformation für die kodierten zweiten Fahrstreckenprofildaten ermittelt wird (S7) und
- abhängig von der Dekodierungsinformation die kodierten zweiten Fahrstreckenprofildaten zumindest teilweise dekodiert und bereitgestellt werden (S9),
**dadurch gekennzeichnet, dass** sich die ersten lokalen physikalischen Fahrbahneigenschaften und die zweiten lokalen physikalischen Fahrbahneigenschaften zumindest teilweise auf unterschiedliche physikalische Fahrbahneigenschaften oder Messgrößen beziehen und
wobei die ersten lokalen physikalischen Fahrbahneigenschaften zumindest teilweise einer ersten Klasse zugeordnet sind und die zweiten lokalen physikalischen Fahrbahneigenschaften zumindest teilweise einer zweiten Klasse zugeordnet sind, wobei die erste Klasse und die zweite Klasse sich derart unterscheiden, dass eine der Klassen lokale physikalische Fahrbahneigenschaften umfasst, die der Fahrbahn direkt zuordenbar sind, und die andere Klasse lokale physikalische Fahrbahneigenschaften umfasst, die abhängig von einer spezifischen Eigenschaft des Fahrzeugs (20) und/oder eines weiteren Fahrzeugs (30) ermittelt wird.

2. Verfahren nach Anspruch 1, bei dem die Dekodierungsinformation
- eine erste Information umfasst, die repräsentativ ist für eine räumliche Zuordnung der zweiten Fahrstreckenprofildaten zu einer aktuellen Position und/oder einer aktuellen Umgebung des Fahrzeugs (20) und/oder
- eine zweite Information umfasst, die repräsentativ ist für einen räumlichen und/oder zeitlichen Versatz zwischen den ersten Fahrstreckenprofildaten und zweiten Fahrstreckenprofildaten und/oder
- eine dritte Information umfasst, die repräsentativ ist für eine räumliche Zuordnung der zweiten Fahrstreckenprofildaten zu einer Fahrstreckenspur oder Fahrstreckenstreifen entlang der Fahrstreckenspur und/oder
- eine vierte Information umfasst, die repräsentativ ist für eine absolute Bezugsgröße oder einen Verlauf einer Bezugsgröße, auf die sich die zumindest eine lokale physikalische Eigenschaft oder die Kodierung bezieht und/oder
- eine fünfte Information umfasst, die repräsentativ ist für eine Zuordnung der zweiten Fahrstreckenprofildaten zu vordefinierten Mustern.

3. Verfahren nach einem der vorstehenden Ansprüche,
bei dem eine Spektralverteilung und/oder die Spektralverteilungsfunktion der ersten Fahrstreckenprofildaten ermittelt wird und ein Ähnlichkeitsmaß zu zwei oder mehreren Spektralverteilungen und/oder Spektralverteilungsfunktionen der zweiten Fahrstreckenprofildaten ermittelt werden, und abhängig von einem oder mehreren Ähnlichkeitsmaßen eine Auswahl eines oder mehrerer Datenabschnitte der zweiten Fahrstreckenprofildaten oder eine Zuordnung von Datenabschnitten der ersten Fahrstreckenprofildaten und der zweiten Fahrstreckenprofildaten erfolgt.

4. Verfahren nach einem der vorhergehenden Ansprüche,
bei dem die Spektralverteilung und/oder die Spektralverteilungsfunktion der zweiten Fahrstreckenprofildaten derart ermittelt ist, dass sie Mehrkanaldaten für zwei oder mehrere Kanäle repräsentiert, wobei ein jeweiliger Kanal der Mehrkanaldaten repräsentativ ist für einen jeweiligen Fahrstreckenstreifen.

5. Verfahren nach einem der vorstehenden Ansprüche,
bei dem die zumindest eine erste lokale physikalische Fahrbahneigenschaft und/oder die zumindest eine zweite lokale physikalische Fahrbahneigenschaft
- einen Verlauf einer lokalen Fahrbahnhöhe und/oder Fahrbahnkrümmung
- und/oder einen Verlauf von Querkräften, die auf das Fahrzeug (20) oder ein weiteres Fahrzeug beim Befahren des Fahrstreckenabschnitts wirken,
- und/oder einen Verlauf eines Reibungskoeffizienten
- und/oder einen Verlauf einer lokalen Temperatur der Fahrbahn
- und/oder einen Verlauf zumindest einer mechanischen Kraft, die auf eine Komponente eines Fahrwerks des Fahrzeugs (20) wirkt, repräsentiert.

6. Verfahren nach einem der vorstehenden Ansprüche,
bei dem in Abhängigkeit von den dekodierten zweiten Fahrstreckenprofildaten mindestens einer der folgenden Schritte durchgeführt wird:
- Ermitteln einer voraussichtlichen Krafteinwirkung und/oder Amplitude einer Einwirkung vorgegebener lokaler Fahrbahneigenschaften auf zumindest ein vorgegebenes Rad des Fahrzeugs (20) beim Befahren des Fahrstreckenabschnitts, insbesondere in Bezug auf eine Ortsinformation oder Zeitinformation,
- Ansteuerung zumindest eines Aktors des Fahrzeugs (20) abhängig von der vorausermittelten Krafteinwirkung und/oder Amplitude.

7. Verfahren nach einem der vorstehenden Ansprüche,
bei dem die ersten Fahrstreckenprofildaten und/oder die zweiten Fahrstreckenprofildaten ermittelt werden beziehungsweise abhängig sind von einem mit Mitteln des Fahrzeugs (20) oder eines weiteren Fahrzeugs (30) erfassten Verlauf eines Fahrstreckenreliefs.

8. Verfahren nach einem der vorstehenden Ansprüche,
bei dem sich die ersten Fahrstreckenprofildaten auf die ersten lokalen physikalischen Fahrbahneigenschaften eines ersten Fahrstreckenabschnitts beziehen und die Dekodierungsinformation für die zweiten Fahrstreckenprofildaten für einen zweiten Fahrstreckenabschnitt ermittelt wird, wobei der erste Fahrstreckenabschnitt und der zweite Fahrstreckenabschnitt unterschiedlich sind.

9. Verfahren nach einem der vorstehenden Ansprüche,
bei dem die ersten Fahrstreckenprofildaten ermittelt werden, indem ein Verlauf von auf das Fahrzeug (20) wirkenden Vertikal- und/oder Querkräften ermittelt wird.

10. Verfahren nach einem der vorstehenden Ansprüche,
bei dem ein Fahrzeugprofil des Fahrzeugs (20) bereitgestellt wird und abhängig von dem Fahrzeugprofil und den zweiten Fahrstreckenprofildaten eine Information ermittelt wird, die repräsentativ ist für zumindest ein Maß einer Einwirkung der lokalen physikalischen Fahrbahneigenschaften auf das Fahrzeug (20) bei einem Befahren eines vorgegebenen lokalen Fahrstreckenabschnitts.

11. Verfahren nach einem der vorstehenden Ansprüche,
bei dem die ersten Fahrstreckenprofildaten und/oder die zweiten Fahrstreckenprofildaten jeweils einen veränderlichen Anteil lokaler physikalischer Fahrbahneigenschaften eines Fahrstreckenabschnitts repräsentieren.

12. Verfahren nach einem der vorstehenden Ansprüche,
bei dem in dem Fahrzeug (20) in Abhängigkeit von den dekodierten zweiten Fahrstreckenprofildaten mindestens einer der folgenden Schritte durchgeführt wird:
- aktive Steuerung von vertikaldynamischer Dämpfung und/oder Beschleunigungseinwirkung auf eine Fahrgastzelle des Fahrzeugs (20), und/oder
- Veränderung einer Funktion, die ein auf das Lenkrad des Fahrzeugs (20) wirkendes Drehmoment abhängig von der Krafteinwirkung der lokalen physikalischen Eigenschaft einer Fahrstrecke auf zumindest ein Rad des Fahrzeugs (20) steuert, und/oder
- Veränderung zumindest einer Fahrzeugfunktion zur teilautomatisierten Längsführung und/oder Querführung des Fahrzeugs (20).

13. Vorrichtung zur Durchführung des Verfahrens nach einem der vorangegangenen Ansprüche,
wobei die Vorrichtung (SV1) dazu ausgebildet ist ein Verfahren nach einem der Ansprüche 1 bis 12 auszuführen.

14. Computerprogramm oder Computerprogrammprodukt umfassend ausführbaren Programmcode, welches ausgebildet ist, ein Verfahren nach einem der Ansprüche 1 bis 12 bei seiner Ausführung auf einer Datenverarbeitungsvorrichtung (SV1) durchzuführen.

## Claims

1. Method for providing data of a route profile in a vehicle (20), wherein
- for a predefined route section first route profile data are determined (S1), depending on data acquired by means of a predefined sensor device (SEN) of the vehicle (20) or of a further vehicle (30), the first route profile data being representative of at least one first local physical roadway property of the predefined route section,
- provided encoded second route profile data are read in (S3), which at least partly relate to the predefined route section, the encoded second route profile data comprising a spectral distribution and/or spectral distribution function determined depending on second route profile data, and the second route profile data being representative of at least one second local physical roadway property,
- a measure of similarity between one or more progressions - represented in the first route profile data and the encoded second route profile data - of at least one physical property and/or spectral distribution function of at least one physical property is determined (S5),
- depending on the measure of similarity, decoding information for the encoded second route profile data is determined (S7) and
- depending on the decoding information, the encoded second route profile data are at least partly decoded and provided (S9),
**characterized in that** the first local physical roadway properties and the second local physical roadway properties at least partly relate to different physical roadway properties or measurement variables and
the first local physical roadway properties being at least partly assigned to a first class and the second local physical roadway properties being at least partly assigned to a second class, the first class and the second class differing in such a way that one of the classes comprises local physical roadway properties which are directly assignable to the roadway, and the other class comprises local physical roadway properties determined depending on a specific property of the vehicle (20) and/or of a further vehicle (30).

2. Method according to Claim 1, wherein the decoding information
- comprises a first piece of information representative of a spatial assignment of the second route profile data to a current position and/or current surroundings of the vehicle (20) and/or
- comprises a second piece of information representative of a spatial and/or temporal offset between the first route profile data and second route profile data and/or
- comprises a third piece of information representative of a spatial assignment of the second route profile data to a route lane or route strip along the route lane and/or
- comprises a fourth piece of information representative of an absolute reference variable or a progression of a reference variable to which the at least one local physical property or the encoding relates and/or
- comprises a fifth piece of information representative of an assignment of the second route profile data to predefined patterns.

3. Method according to either of the preceding claims, wherein a spectral distribution and/or the spectral distribution function of the first route profile data are/is determined and a measure of similarity with respect to two or more spectral distributions and/or spectral distribution functions of the second route profile data is determined, and depending on one or more measures of similarity, a selection of one or more data sections of the second route profile data or an assignment of data sections of the first route profile data and of the second route profile data is effected.

4. Method according to any of the preceding claims,
wherein the spectral distribution and/or the spectral distribution function of the second route profile data are/is determined in such a way as to represent multi-channel data for two or more channels, a respective channel of the multi-channel data being representative of a respective route strip.

5. Method according to any of the preceding claims,
wherein the at least one first local physical roadway property and/or the at least one second local physical roadway property represent(s)
- a progression of a local roadway height and/or roadway curvature
- and/or a progression of transverse forces which act on the vehicle (20) or a further vehicle when travelling along the route section,
- and/or a progression of a coefficient of friction
- and/or a progression of a local temperature of the roadway
- and/or a progression of at least one mechanical force that acts on a component of a chassis of the vehicle (20) .

6. Method according to any of the preceding claims, wherein depending on the decoded second route profile data, at least one of the following steps is carried out:
- determining an expected force effect and/or amplitude of an effect of predefined local roadway properties on at least one predefined wheel of the vehicle (20) when travelling along the route section, in particular in relation to location information or time information,
- controlling at least one actuator of the vehicle (20) depending on the predetermined force effect and/or amplitude.

7. Method according to any of the preceding claims, wherein the first route profile data and/or the second route profile data are determined or are dependent on a progression of a route relief that is detected using means of the vehicle (20) or of a further vehicle (30).

8. Method according to any of the preceding claims, wherein the first route profile data relate to the first local physical roadway properties of a first route section and the decoding information for the second route profile data is determined for a second route section, the first route section and the second route section being different.

9. Method according to any of the preceding claims, wherein the first route profile data are determined by a progression of vertical and/or transverse forces that act on the vehicle (20) being determined.

10. Method according to any of the preceding claims, wherein a vehicle profile of the vehicle (20) is provided and information representative of at least one measure of an effect of the local physical roadway properties on the vehicle (20) when travelling along a predefined local route section is determined depending on the vehicle profile and the second route profile data.

11. Method according to any of the preceding claims, wherein the first route profile data and/or the second route profile data in each case represent a variable proportion of local physical roadway properties of a route section.

12. Method according to any of the preceding claims, wherein in the vehicle (20) depending on the decoded second route profile data, at least one of the following steps is carried out:
- active control of vertical-dynamic damping and/or acceleration effect on a passenger cell of the vehicle (20), and/or
- variation of a function which controls a torque acting on the steering wheel of the vehicle (20) depending on the force effect of the local physical property of a route on at least one wheel of the vehicle (20), and/or
- variation of at least one vehicle function for partly automated longitudinal guidance and/or transverse guidance of the vehicle (20).

13. Device for carrying out the method according to any of the preceding claims,
wherein the device (SV1) is designed to perform a method according to any of Claims 1 to 12.

14. Computer program or computer program product comprising executable program code, which is designed to carry out a method according to any of Claims 1 to 12 when it is executed on a data processing device (SV1).

## Revendications

1. Procédé pour fournir des données d'un profil de trajet dans un véhicule (20), dans lequel
- des premières données de profil de trajet sont déterminées (S1) pour un tronçon de trajet prédéterminé, en fonction de données détectées au moyen d'un dispositif capteur (SEN) prédéterminé du véhicule (20) ou d'un autre véhicule (30), les premières données de profil de trajet étant représentatives d'au moins une première propriété de chaussée physique locale du tronçon de trajet prédéterminé,
- des deuxièmes données de profil de trajet codées, mises à disposition, sont lues (S3), lesquelles se rapportent au moins en partie au tronçon de trajet prédéfini, les deuxièmes données de profil de trajet codées comprenant une distribution spectrale et/ou une fonction de distribution spectrale déterminée en fonction des deuxièmes données de profil de trajet, et les deuxièmes données de profil de trajet étant représentatives d'au moins une deuxième propriété de chaussée physique locale,
- une mesure de similitude entre une ou plusieurs variations, représentées dans les premières données de profil de trajet et les deuxièmes données de profil de trajet codées, d'au moins une propriété physique et/ou une fonction de distribution spectrale d'au moins une propriété physique est déterminée (S5),
- en fonction de la mesure de similitude, une information de décodage est déterminée pour les deuxièmes données de profil de trajet codées (S7) et
- en fonction de l'information de décodage, les deuxièmes données de profil de trajet codées sont au moins en partie décodées et mises à disposition (S9),
**caractérisé en ce que** les premières propriétés de chaussée physiques locales et les deuxièmes propriétés de chaussée physiques locales se rapportent au moins en partie à des propriétés physiques différentes de la chaussée ou à des grandeurs de mesure différentes et les premières propriétés de chaussée physiques locales étant au moins en partie associées à une première classe et les deuxièmes propriétés de chaussée physiques locales étant au moins en partie associées à une deuxième classe, la première classe et la deuxième classe se distinguant de telle sorte que l'une des classes comprend des propriétés de chaussée physiques locales qui peuvent être directement associées à la chaussée, et que l'autre classe comprend des propriétés de chaussée physiques locales qui sont déterminées en fonction d'une propriété spécifique du véhicule (20) et/ou d'un autre véhicule (30) .

2. Procédé selon la revendication 1, dans lequel l'information de décodage
- comprend une première information représentative d'une association spatiale des deuxièmes données de profil de trajet avec une position actuelle et/ou un environnement actuel du véhicule (20) et/ou
- comprend une deuxième information représentative d'un décalage spatial et/ou temporel entre les premières données de profil de trajet et les deuxièmes données de profil de trajet et/ou
- comprend une troisième information représentative d'une association spatiale des deuxièmes données de profil de trajet avec une voie de circulation ou des bandes de circulation le long de la voie de circulation et/ou
- comprend une quatrième information représentative d'une valeur de référence absolue ou d'une variation d'une valeur de référence à laquelle se rapporte ladite au moins une propriété physique locale ou ledit codage et/ou
- comprend une cinquième information représentative d'une association des deuxièmes données de profil de trajet à des configurations prédéfinies.

3. Procédé selon l'une des revendications précédentes, dans lequel une distribution spectrale et/ou la fonction de distribution spectrale des premières données de profil de trajet est déterminée et une mesure de similitude est déterminée pour deux ou plusieurs distributions spectrales et/ou fonctions de distribution spectrale des deuxièmes données de profil de trajet et, en fonction d'une ou de plusieurs mesures de similitude, une sélection d'une ou de plusieurs parties de données des deuxièmes données de profil de trajet ou une association de parties de données des premières données de profil de trajet et des deuxièmes données de profil de trajet est effectuée.

4. Procédé selon l'une des revendications précédentes, dans lequel la distribution spectrale et/ou la fonction de distribution spectrale des deuxièmes données de profil de trajet est déterminée de telle sorte qu'elle représente des données multicanaux pour deux ou plusieurs canaux, n canal respectif des données multicanaux étant représentatif d'une bande de circulation respective.

5. Procédé selon l'une des revendications précédentes, dans lequel ladite au moins une première propriété de chaussée physique locale et/ou ladite au moins une deuxième propriété de chaussée physique locale représente
- une variation d'une hauteur locale de la chaussée et/ou d'une courbure de la chaussée
- et/ou une variation de forces transversales qui agissent sur le véhicule (20) ou un autre véhicule lors du passage sur le tronçon de route
- et/ou une variation d'un coefficient de frottement,
- et/ou une variation d'une température locale de la chaussée
- et/ou une variation d'au moins une force mécanique agissant sur un composant d'un train de roulement du véhicule (20).

6. Procédé selon l'une des revendications précédentes, dans lequel, en fonction des deuxièmes données de profil de trajet décodées, au moins l'une des étapes suivantes est réalisée :
- détermination d'une force et/ou d'une amplitude prévisibles d'un effet de propriétés locales prédéterminées de la chaussée sur au moins une roue prédéterminée du véhicule (20) lors du passage sur le tronçon de trajet, notamment par rapport à une information de lieu ou une information de temps,
- attaque d'au moins un actionneur du véhicule (20) en fonction de l'action de force et/ou de l'amplitude prédéterminée.

7. Procédé selon l'une des revendications précédentes, dans lequel les premières données de profil de trajet et/ou les deuxièmes données de profil de trajet sont déterminées ou sont fonction d'une variation d'un relief de trajet détectée par des moyens du véhicule (20) ou d'un autre véhicule (30).

8. Procédé selon l'une des revendications précédentes, dans lequel les premières données de profil de trajet se rapportent aux premières propriétés de chaussée physiques locales d'un premier tronçon de trajet et l'information de décodage correspondant aux deuxièmes données de profil de trajet est déterminée pour un deuxième tronçon de trajet, le premier tronçon de trajet et le deuxième tronçon de trajet étant différents.

9. Procédé selon l'une des revendications précédentes, dans lequel les premières données de profil de trajet sont déterminées par détermination d'une variation des forces verticales et/ou transversales agissant sur le véhicule (20).

10. Procédé selon l'une des revendications précédentes, dans lequel un profil du véhicule (20) est fourni et, en fonction du profil du véhicule et des deuxièmes données de profil de trajet, une information est déterminée, laquelle est représentative d'au moins une mesure d'un effet des propriétés de chaussée physiques locales sur le véhicule (20) lors d'un passage sur un tronçon de trajet local prédéterminé.

11. Procédé selon l'une des revendications précédentes, dans lequel les premières données de profil de trajet et/ou les deuxièmes données de profil de trajet sont respectivement représentatives d'une proportion variable de propriétés de chaussée physiques locales d'un tronçon de trajet.

12. Procédé selon l'une des revendications précédentes, dans lequel, en fonction des deuxièmes données de profil de trajet décodées, au moins l'une des étapes suivantes est réalisée dans le véhicule (20) :
- commande active d'un amortissement dynamique vertical et/ou d'une action d'accélération sur un habitacle du véhicule (20), et/ou
- modification d'une fonction qui commande un couple agissant sur le volant du véhicule (20) en fonction de l'action de force de la propriété physique locale d'un trajet sur au moins une roue du véhicule (20), et/ou
- modification d'au moins une fonction du véhicule pour le guidage longitudinal et/ou le guidage transversal en partie automatisé du véhicule (20).

13. Dispositif pour la mise en œuvre du procédé selon l'une des revendications précédentes,
dans lequel le dispositif (SV1) est conçu pour mettre en œuvre un procédé selon l'une des revendications 1 à 12.

14. Programme d'ordinateur ou produit de programme d'ordinateur comprenant un code de programme exécutable conçu pour mettre en œuvre un procédé selon l'une des revendications 1 à 12 lors de son exécution sur un dispositif de traitement de données (SV1).
